# EUROPEAN PATENT SPECIFICATION

(11) **EP 2 832 803 B1**
(45) Date of publication and mention of the grant of the patent: **10.10.2018**
(21) Application number: 13767510.4
(22) Date of filing: 26.03.2013
(51) Int. Cl.: B41J 2/01, B41M 5/00, C09D 11/101, C09D 11/322

(54) **ACTIVE LIGHT-CURABLE INKJET INK COMPOSITION, METHOD FOR PRODUCING SAME, INKJET RECORDING METHOD, AND PRINTED MATERIAL**
LICHTHÄRTBARE AKTIVE TINTENSTRAHLTINTENZUSAMMENSETZUNG, HERSTELLUNGSVERFAHREN DAFÜR, TINTENSTRAHLAUFZEICHNUNGSVERFAHREN UND BEDRUCKTES MATERIAL
COMPOSITION D'ENCRE POUR JET D'ENCRE DURCISSABLE PAR UNE LUMIÈRE ACTIVE, SON PROCÉDÉ DE FABRICATION, PROCÉDÉ D'ENREGISTREMENT PAR JET D'ENCRE ET MATIÈRE IMPRIMÉE

(30) Priority: 28.03.2012 JP 2012073511
(43) Date of publication of application: 04.02.2015
(73) Proprietor: Fujifilm Corporation, Minato-ku Tokyo 106-8620 (JP)
(72) Inventor: UMEBAYASHI Tsutomu, Ashigarakami-gun Kanagawa 258-8577 (JP)
(74) Representative: Klunker IP Patentanwälte PartG mbB
(86) International application number: PCT/JP2013/058664
(87) International publication number: WO 2013/146722

(56) References cited:
- EP-A1- 2 703 455
- WO-A1-2008/038508
- WO-A1-2011/027162
- JP-A- 2006 206 875
- JP-A- 2008 080 629
- JP-A- 2008 080 629
- JP-A- 2008 081 594
- JP-A- 2009 149 719
- JP-A- 2009 149 719
- JP-A- 2010 235 914
- JP-A- 2011 201 932
- US-A1- 2010 092 736

## Description

### Technical Field

The present invention relates to a radiation-curable inkjet ink composition and a process for making the same, an inkjet recording method, and a printed material.

### Background Art

With regard to an inkjet system in which an ink composition is discharged from an ink discharge opening as liquid droplets, since the printing equipment is inexpensive and has a small size, and an image can be formed without contacting a recording medium, the inkjet recording method is adopted by many printers. Among the inkjet systems, a piezo inkjet system in which an ink is discharged using a deformation of piezo-electric element, and a thermal inkjet system in which an ink composition is discharged as an liquid droplet using boiling phenomenon by thermal energy have properties such as high resolution and high-speed printing.

In recent years, development of the use of inkjet printers has been carried out not only in the field of photographic printing and document printing for domestic use and office use but also in the field of commercial printing and industrial printing. In particular, the demand for wide format inkjet printers suitable for the printing of large-size advertisement posters that are to be affixed to shop windows or walls of buildings, etc. has been increasing rapidly. Since large-size advertisement posters are often used mainly outdoors and are required to have a long-term weather resistance, polyvinyl chloride, etc. is widely used as a substrate, and pigments having an azo skeleton (mainly yellow applications), quinacridone pigments (mainly magenta applications), copper phthalocyanine pigments (mainly cyan applications), and carbon black (mainly black applications), which are excellent in terms of weatherability (light, rain, and wind), are widely used as pigments.

Furthermore, for full color printing, an inkjet ink set comprising inks of each of the three subtractive primary colors, comprising yellow, magenta, and cyan or, with the addition of a black ink, inks of four colors has been used.

As conventional ink compositions, those described in WO 2007/029448, JP-A-2003-342503 (JP-A denotes a Japanese unexamined patent application publication.), and WO 2008/003508 can be cited.

### Summary of Invention

On the other hand, in recent years, inkjet printing has been used not only for outdoor advertisement posters but also for patterned printed materials for building materials.

The present inventor has found that an ink set used for printing a pattern for a building material is required to have properties that are different from those of an ink set for outdoor advertisement posters. That is, an actinic radiation-curable type inkjet ink set mainly used for a patterned printed material for a building material is further required to have properties (1) and (2) below.
(1) The printed material is required to have a weatherability of at least 10 years.
(2) In order to satisfy the requirement for a printed material to have a weatherability of at least 10 years, an inorganic pigment is preferably used as a pigment of an ink composition, but since an inorganic pigment has a higher density than that of an organic pigment, which has been used conventionally, sedimentation of the pigment easily occurs in the ink composition while inkjet printing is suspended. This can cause nozzle clogging of a head of an inkjet printer, and it is necessary to prevent this.

It is an object of the present invention to provide a radiation-curable inkjet ink composition that can give an ink image having excellent scratch resistance, weatherability, and color reproducibility (color density and saturation) and that has excellent storage stability while printing is suspended, a process for producing same, an inkjet recording method, and a printed material.

The object has been attained by means described in <1>, <10>, <11>, or <13>. They are described below together with <2> to <9> and <12>, which are preferred embodiments.
<1> A radiation-curable inkjet ink composition comprising Pigment Yellow 184 (PY184), a polymeric dispersant, a polymerizable compound, and a polymerization initiator, the content of PY184 being 2 to 10 mass %, and the 90% volume particle size of PY184 being 200 to 400 nm,
<2> the radiation-curable inkjet ink composition according to <1>, wherein the density of PY184 is 5.0 to 5.5 g/cm³,
<3> the radiation-curable inkjet ink composition according to <1> or <2>, wherein the content of PY184 is 4 to 10 mass %,
<4> the radiation-curable inkjet ink composition according to any one of <1> to <3>, wherein the polymeric dispersant is a polymer having a weight-average molecular weight of 10,000 to 300,000 and an amine value of 10 to 45 mg KOH/g,
<5> the radiation-curable inkjet ink composition according to any one of <1> to <4>, wherein the polymeric dispersant has a Tg of no greater than 25°C,
<6> the radiation-curable inkjet ink composition according to any one of <1> to <5>, wherein the polymeric dispersant has a weight-average molecular weight of 45,000 to 250,000,
<7> the radiation-curable inkjet ink composition according to any one of <1> to <6>, wherein it comprises as the polymerization initiator a bisacylphophine oxide and/or a thioxanthone compound,
<8> the radiation-curable inkjet ink composition according to any one of <1> to <7>, wherein it comprises as the polymerizable compound *N-*vinylcaprolactam and/or cyclic trimethylolpropaneformal acrylate,
<9> the radiation-curable inkjet ink composition according to any one of <1> to <8>, wherein it comprises as the polymerizable compound *N-*vinylcaprolactam and cyclic trimethylolpropaneformal acrylate,
<10> a process for producing the radiation-curable inkjet ink composition according to any one of <1> to <9>, comprising a pigment dispersion step of subjecting a preliminary pigment dispersion comprising PY184 at 20 to 50 mass % and a polymeric dispersant to a pigment dispersion treatment to thus prepare a pigment dispersion, and a dilution step of mixing the pigment dispersion and a liquid comprising at least a polymerizable compound and a polymerization initiator to thus produce a radiation-curable inkjet ink composition comprising PY184 at a content of 2 to 10 mass %,
<11> an inkjet recording method comprising (a¹) a step of discharging onto a recording medium the radiation-curable inkjet ink composition according to any one of <1> to <9> or a radiation-curable inkjet ink composition produced by the process according to <10>, and (b¹) a step of irradiating the discharged inkjet ink composition with actinic radiation to thus cure the inkjet ink composition,
<12> the inkjet recording method according to <11 >, wherein the recording medium is a building material, and
<13> a printed material formed by the inkjet recording method according to <11> or <12>.

According to the present invention, there can be provided a radiation-curable inkjet ink composition that can give an ink image having excellent scratch resistance, weatherability, and color reproducibility (color density and saturation) and that has excellent storage stability while printing is suspended, a process for producing same, an inkjet recording method, and a printed material.

### Description of Embodiments

The present invention is explained in detail below.

In the specification, the notation 'lower limit to upper limit' means 'at least the lower limit but no greater than the upper limit', and the notation 'upper limit to lower limit' means 'no greater than the upper limit but at least the lower limit'. That is, it means a numerical range that includes the upper limit and the lower limit. Moreover, 'Pigment Yellow 184', etc. is also called 'C.I. Pigment Yellow 184', 'P.Y.184', or 'PY184'. Furthermore, '(meth)acrylate', etc. has the same meaning as that of 'acrylate and/or methacrylate', etc., and the same applies below.

Moreover, in the present invention 'mass %' and 'wt %' have the same meaning, and 'parts by mass' and 'parts by weight' have the same meaning.

Furthermore, in the explanation below, a combination of preferred embodiments is a more preferred embodiment.

### (Radiation-curable inkjet ink composition)

The radiation-curable inkjet ink composition (hereinafter, also called simply an 'ink composition' or 'ink') of the present invention comprises Pigment Yellow 184 (PY184), a polymeric dispersant, a polymerizable compound, and a polymerization initiator, the content of PY184 being 2 to 10 mass %, and the 90% volume particle size of PY184 being 200 to 400 nm.

The ink composition of the present invention is a nonaqueous ink composition.

The ink composition of the present invention is preferably an oil-based ink composition that can be cured by means of actinic radiation. Furthermore, the ink composition of the present invention is preferably a solvent-free ink composition comprising no volatile organic solvent. 'Actinic radiation' is radiation that can impart energy that generates an initiating species in an ink composition by irradiation therewith, and includes α-rays, γ-rays, X-rays, UV, visible light, an electronic beam, etc. Among them, from the viewpoint of curing sensitivity and ready availability of equipment, UV and an electronic beam are preferable, and UV is more preferable.

Furthermore, the ink composition of the present invention can be suitably used as a radiation-curable yellow inkjet ink composition.

PY184, the polymeric dispersant, the polymerizable compound, the polymerization initiator, and other components contained in the ink composition of the present invention are explained below.

### <Pigment Yellow 184>

The ink composition of the present invention comprises Pigment Yellow 184 (C.I. Pigment Yellow 184; hereinafter, also called PY184).

PY184 is a yellow inorganic pigment formed from bismuth vanadate; the PY184 that can be used in the present invention is not particularly limited, but the commercially available pigments below may preferably be used.

Examples of PY184 include Sicopal L1100, Sicopal L1110, Sicopal L1120, and Sicopal L1600 (all manufactured by BASF) and Lysopac Yellow 6601B, Lysopac Yellow 6611B, Lysopac Yellow 6615B, and Lysopac Yellow 6616B (all manufactured by Cappelle).

The ink composition of the present invention is characterized by the content of PY184 being 2 to 10 mass % and the 90% volume particle size of PY184 being 200 to 400 nm.

When the content of PY184 in the ink composition is within the above numerical range a balance can be achieved between sufficient yellow coloration and sufficient curability in an actinic radiation (in particular UV) curable ink. In order to achieve sufficient coloration and curability in a radiation-curable ink, the content of PY184 in the ink composition is preferably 4 to 10 mass %, and more preferably 4 to 8 mass %.

Furthermore, when the 90% volume particle size (DV90) of PY184 in the ink composition is within the above numerical range, interaction between pigment particles does not intensify, as a result increase in ink viscosity is suppressed, and it is preferable in terms of discharge stability.

The 90% volume particle size (DV90) referred to here means a cumulative 90% particle size when the volume is plotted as a cumulative distribution from the small diameter side with respect to particle size ranges (channels) grouped based on a particle size distribution measured by a particle size distribution profiler, etc.

It is preferable for the DV90 to be within the above numerical range since it becomes unnecessary to employ an unnecessarily high shear and an unnecessarily long dispersion time when carrying out pigment dispersion, and unnecessarily decomposition or reaction of a dispersing medium or a polymerizable compound in the ink composition is suppressed. Furthermore, when the DV90 is within the above numerical range, the occurrence of failure of an inkjet head due to formation of a precipitate of the pigment while an inkjet printer is inactive is suppressed, which is preferable.

When taking into consideration ink viscosity, necessary energy during pigment dispersion, and the avoidance of failure of an inkjet head (storage stability while an inkjet printer is inactive), the 90% volume particle size (DV90) of PY184 in the ink composition is preferably 210 to 300 nm, and more preferably 220 to 270 nm.

The DV90 volume particle size may be measured using a laser diffraction particle size distribution analyzer (for example, a Mastersizer 2000 manufactured by Malvern Instrument Ltd., or an LA-920 laser diffraction/scattering type particle size distribution profiler manufactured by Horiba, Ltd., etc.). A solvent for sample dilution used at the time of measurement is not particularly limited as long as it is a liquid that does not destroy the dispersion system, and in the case of the ink composition of the present invention, a propylene glycol ether (for example, QV017 washing liquid for a UV-curable ink manufactured by Fujifilm Corporation) may preferably be used. With regard to parameters set at the time of measurement, for example, the refractive index of the pigment is 2.5 to 2.7 (e.g. 2.6), the absorption of the pigment is 0.005 to 0.05 (e.g. 0.01), and the refractive index of the solvent is any value (e.g. 1.429 when QV017 is used).

The particle size of the pigment may be adjusted by selection of a dispersant, which is described later, (and further a dispersing medium if necessary) and setting of dispersion conditions and filtration conditions, etc. By controlling the particle size of the pigment, the flowability and storage stability of the pigment dispersion can be maintained.

From the viewpoint of avoidance of failure of an inkjet head (nozzle clogging) due to pigment precipitation while a printer is inactive, the density of PY184 used in the present invention is preferably 5.0 to 7.5 g/cm³, more preferably 5.0 to 5.5 g/cm³, and yet more preferably 5.3 to 5.5 g/cm³. The density may be measured based on ISO 787-10.

From the two viewpoints of ease of dispersion to a sufficiently small particle size and sufficient coloration being obtained due to little scattering, the specific surface area of PY184 used in the present invention is preferably 6 to 12 m²/g. The specific surface area may be measured by a BET method (e.g. a method in accordance with DIN 66131 or DIN 66132).

The PY184 used in the present invention may be used on its own as a yellow pigment or may be used with another yellow pigment as a combination of two or more types. It is particularly preferable to use one type on its own. When another yellow pigment is used in combination, the content ratio may be any ratio, but the PY184:other yellow pigment ratio is preferably 51:49 to 99:1, more preferably 60:40 to 99:1, and yet more preferably 70:30 to 99:1.

The content of PY184 in the ink composition of the present invention is as described above although it depends on various physical properties of the PY184 used, pigment dispersion conditions, which are described later, and conditions of the inkjet printer system in which the ink is loaded.

Furthermore, the content of PY184 in a preliminary pigment dispersion, which is to be dispersed to give a pigment dispersion (hereinafter, also called a 'mill base' or a 'mill') used in production of the ink composition, is preferably, relative to the total mass of the preliminary pigment dispersion, 20 to 50 mass%, more preferably 20 to 45 mass%, and particularly preferably 25 to 45 mass%.

When within this numerical range, an ink composition having a desired DV90 and good storage stability and coloration can be obtained.

### <Polymeric dispersant>

The inkjet ink composition of the present invention comprises a polymeric dispersant.

In the present invention, the polymeric dispersant is preferably a polymer dispersant having a weight-average molecular weight of 10,000 to 300,000.

From the viewpoint of avoidance of nozzle clogging failure (nozzle clogging) of an inkjet head due to pigment precipitation while printing by an inkjet printer is suspended, the polymeric dispersant used in the present invention preferably comprises a polymer having a weight-average molecular weight of 10,000 to 300,000 and has an amine value of 10 to 45 mg KOH/g.

It has been found that when the molecular weight and the amine value of the polymeric dispersant are within these numerical ranges, it is possible to avoid failure of an inkjet head due to pigment precipitation while printing by an inkjet printer is suspended. Furthermore, when the molecular weight of the polymeric dispersant is within the above numerical range, the viscosity during dispersion becomes appropriate, and the DV90 of the pigment attains a desired particle size. Moreover, with regard to the amine value, when it is within the above numerical range, the storage stability of the ink composition of the present invention is good.

The weight-average molecular weight of the polymeric dispersant used in the present invention is preferably 10,000 to 300,000, more preferably 20,000 to 300,000, and yet more preferably 45,000 to 250,000.

The amine value of the polymeric dispersant used in the present invention is preferably 10 to 45mg KOH/g, and more preferably 10 to 40 mg KOH/g.

The weight-average molecular weight (Mw) of the polymeric dispersant may be measured by a known method. For example, it may be measured using an HLC-8220 GPC (Tosoh Corporation) under GPC measurement conditions (solvent: *N*-methyl-2-pyrrolidone (10 mM LiBr), column: microparticle gel using a hydrophilic vinyl polymer as a substrate, column temperature: 40°C, flow rate: 0.5 mL/min, sample concentration: 0.1 mass%, amount injected: 60µL, detector: RI) as a value on a polystyrene basis. When there is a catalog value, the catalog value may be used as the weight-average molecular weight of the polymeric dispersant.

The amine value of the polymeric dispersant may be measured by the following procedure. A polymeric dispersant is dissolved in methyl isobutyl ketone, potentiometric titration is carried out using a 0.01 mole/L methyl isobutyl ketone solution of a perchlorate, and the amine value is defined as that calculated on a mg KOH/g basis. The potentiometric titration may be carried out using for example a COM-1500 automatic titration apparatus manufactured by Hiranuma Sangyo Corporation.

From the viewpoint of avoiding ink film cracking over time outdoors, the polymeric dispersant used in the present invention preferably has a glass transition temperature (Tg) of lower than normal temperature (25°C), more preferably no greater than 0°C, and yet more preferably no greater than -15°C.

The Tg of a polymeric dispersant may be measured by a differential thermal analysis (DTA) method, a differential scanning calorimetry (DSC) method, etc.

The polymeric dispersant having an amine value of 10 to 45 mg KOH/g suitably used in the present invention is preferably a basic polymeric dispersant as a pigment dispersant. The basic polymeric dispersant is a polymeric dispersant having at least a basic group.

Examples of the basic group include an amino group, an imino group, an amide group, an imide group, and a nitrogen-containing heterocyclic group. Furthermore, the basic group may be present in a main chain or a side chain of the polymeric dispersant or may be present in both thereof.

Among them, from the viewpoint of storage stability and re-dispersibility, a polymeric dispersant having an amino group in a main chain or a side chain is preferable, a polymeric dispersant having a secondary or tertiary amino group in a main chain or a side chain is more preferable, and a polymeric dispersant having a secondary or tertiary alkylamino group in a main chain or a side chain is yet more preferable.

The polymeric dispersant used in the present invention preferably has a structure having an amine moiety in a main chain or a side chain. Furthermore, a terminal-modified polymer, a graft polymer, and a block polymer can be cited as preferred structures.

Specific examples of the polymeric dispersant preferably used in the present invention include an amine-modified vinyl polymer as well as a polymer such as an acid ester salt of a polyaminoamide, a modified polyethylene imine, or a modified polyallylamine.

The polymer that can be used preferably as the polymeric dispersant used in the present invention is explained below, but the present invention is not limited thereto.

As the polymer that can be used preferably as the polymeric dispersant used in the present invention, there can be cited as examples (1) a homopolymer of a monomer having an amino group and an ethylenically unsaturated bond (also called an ethylenically unsaturated double bond) or a copolymer of a monomer having an amino group and an ethylenically unsaturated bond and another monomer, (2) a copolymer of a monomer having an amino group and an ethylenically unsaturated bond and a polymerizable oligomer having an ethylenically unsaturated bond at a terminal, and (3) a polymer comprising a constituent unit having an amino group and a constituent unit having a pigment analogue residue. (1) to (3) are explained below.
(1) The homopolymer of a monomer having an amino group and an ethylenically unsaturated bond or the copolymer of a monomer having an amino group and an ethylenically unsaturated bond and another monomer is preferably a copolymer of a monomer having an amino group and an ethylenically unsaturated bond and another monomer. It is particularly preferably a copolymer of a monomer having an amino group and an ethylenically unsaturated bond and an alkyl (meth)acrylate ester and/or an alkylaryl (meth)acrylate ester.

Examples of the monomer having an amino group and an ethylenically unsaturated group include *N,N*-dimethylaminoethyl(meth)acrylate, *N,N-*dimethylaminopropyl(meth)acrylate, 1-(*N,N*-dimethylamino)-1,1-dimethylmethyl(meth)acrylate, *N,N*-dimethylaminohexyl(meth)acrylate, *N,N-*diethylaminoethyl(meth)acrylate, *N,N*-diisopropylaminoethyl(meth)acrylate, *N,N-*di-n-butylaminoethyl(meth)acrylate, *N,N*-di-i-butylaminoethyl(meth)acrylate, morpholinoethyl(meth)acrylate, piperidinoethyl(meth)acrylate, 1-pyrrolidinoethyl(meth)acrylate, *N,N*-methyl-2-pyrrolidylaminoethyl(meth)acrylate and *N,N*-methylphenylaminoethyl(meth)acrylate (the monomers mentioned above are (meth)acrylates); (meth)acryloylmorpholine, piperidino(meth)acrylamide, *N*-methyl-2-pyrrolidyl(meth)acrylamide, 2-(*N,N-*dimethylamino)ethyl(meth)acrylamide, 2-(*N,N-*diethylamino)ethyl(meth)acrylamide, 3-(*N,N-*diethylamino)propyl(meth)acrylamide, 3-(N,N-dimethylamino)propyl(meth)acrylamide, 1-(*N,N*-dimethylamino)-1,1-dimethylmethyl(meth)acrylamide, and 1-(*N,N-*diethylamino)hexyl(meth)acrylamide (the monomers mentioned above are (meth)acrylamides); *p*-vinylbenzyl-*N,N*-dimethylamine, *p*-vinylbenzyl-*N,N-*diethylamine, and *p*-vinylbenzyl-*N,N*-dihexylamine (the monomers mentioned above are vinylbenzylamines); and 2-vinylpyridine, 4-vinylpyridine, and *N-*vinylimidazole. Among these, *N,N*-dimethylaminoethyl(meth)acrylate, *N,N-*dimethylaminopropyl(meth)acrylate, 3-(*N,N-*diethylamino)propyl(meth)acrylamide, and 3-(*N,N-*dimethylamino)propyl(meth)acrylamide are preferable.

The monomer that is copolymerizable with the monomer having an amino group and an ethylenically unsaturated bond is not particularly limited as long as it is a monomer that is copolymerizable therewith, and a known ethylenically unsaturated compound may be used.

Examples of the other monomers copolymerizable with these monomers may include aromatic vinyl compounds (for example, styrene, α-methylstyrene, vinyltoluene, 2-vinylpyridine, 4-vinylpyridine and *N*-vinylimidazole), alkyl(meth)acrylates (for example, methyl(meth)acrylate, ethyl(meth)acrylate, *n-*butyl(meth)acrylate and *i*-butyl(meth)acrylate), alkylaryl(meth)acrylates (for example, benzyl(meth)acrylate), substituted alkyl(meth)acrylates (for example, glycidyl(meth)acrylate and 2-hydroxyethyl(meth)acrylate), vinyl carboxylates (for example, vinyl acetate and vinyl propionate), vinyl cyanates (for example, (meth)acrylonitrile and α-chloroacrylonitrile), aliphatic conjugate dienes (for example, 1,3-butadiene and isoprene) and unsaturated carboxylic acids (for example, (meth)acrylic acids, crotonic acid, itaconic acid, maleic acid and fumaric acid). Among these compounds, unsaturated carboxylic acids, alkyl(meth)acrylates, alkylaryl(meth)acrylates, and vinyl carboxylates are preferable.

Furthermore, from the viewpoint of dispersion stabilization, the polymeric dispersant used in the present invention is also preferably (2) a copolymer of a monomer having an amino group and an ethylenically unsaturated bond and a polymerizable oligomer having an ethylenically unsaturated bond at a terminal. The polymerizable oligomer used for the polymeric dispersant used in the present invention may employ a known oligomer according to affinity toward the polymerizable compound in the ink composition. As the polymerizable oligomer, those described in paragraphs 0029 to 0039 of JP-A-2007-9117 may preferably be used.

In (2) above, it is also preferable to copolymerize a monomer having an amino group and an ethylenically unsaturated bond, a polymerizable oligomer having an ethylenically unsaturated bond at a terminal and, furthermore, another monomer having an ethylenically unsaturated bond.

In (1) and (2) above, the content of a monomer unit having an amino group in the polymeric dispersant used in the present invention is preferably in the range of 2 to 50 mass % relative to the total mass of the polymeric dispersant, and more preferably in the range of 5 to 30 mass %.

Furthermore, in (2) the polymeric dispersant used in the present invention preferably comprises the polymerizable oligomer (macromonomer)-derived constituent unit at 30 to 98 mass % relative to the total mass of the polymeric dispersant, and more preferably 70 to 95 mass %.

In (2), when the polymeric dispersant used in the present invention further comprises as a copolymerization component a monomer (other monomer) other than the monomer having an amino group and an ethylenically unsaturated bond and the polymerizable oligomer, it preferably comprises the monomer unit having an amino group and an ethylenically unsaturated bond in the range of 2 to 40 mass % relative to the total mass of the polymeric dispersant, and more preferably in the range of 5 to 20 mass %. Furthermore, it preferably comprises the polymerizable oligomer (macromonomer)-derived constituent unit at 30 to 98 mass % relative to the total mass of the polymeric dispersant, and more preferably 60 to 95 mass %.

Examples of the monomer having an amino group and an ethylenically unsaturated group in (2) include monomers described for (1), and preferred embodiments are also the same. Particularly preferred specific examples of the monomer having an amino group and an ethylenically unsaturated bond include 3-dimethylaminopropylacrylamide and *N,N*-dimethylaminoethyl methacrylate.

Preferred specific examples of the polymerizable oligomer (macromonomer) include a terminal methacryloyl-modified polymethyl methacrylate (AA-6, Toagosei Co., Ltd.), a terminal methacryloyl-modified polybutyl acrylate (AB-6, Toagosei Co., Ltd.), methoxypolyethylene glycol monomethacrylate (Blemmer PME-4000, NOF Corporation), a terminal acryloyl-modified polycaprolactone (Placcel FA10L, Daicel Corporation), and a terminal methacryloyl-modified polymethyl methacrylate (AA-6, Toagosei Co., Ltd.).
(3) The polymer comprising a constituent unit having an amino group and a constituent unit having pigment analogue residue is now explained.

Furthermore, in the present invention, a polymeric dispersant comprising a constituent unit having a pigment analogue residue, represented by Formula (1) below, may also preferably be used. 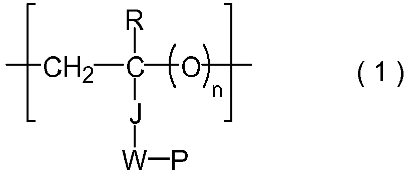 (In Formula (1), R denotes a hydrogen atom or a methyl group, J denotes -CO-, -COO-, -OCO-, a methylene group, or a phenylene group, n denotes 0 or 1, W denotes a single bond or a divalent linking group, and P denotes a pigment analogue residue (hereinafter, also called a 'pigment analogue skeleton') formed by removing one hydrogen atom from a structure selected from the group consisting of quinacridone, benzimidazolone, indole, quinoline, carbazole, acridine, acridone, anthraquinone, phthalimide, and naphthalimide.)

P in Formula (1) above is particularly preferably a pigment analogue residue formed by removing one hydrogen atom from a structure selected from the group consisting of acridone and phthalimide when taking into consideration adsorption onto a pigment surface and ready availability of starting materials.

Examples of the divalent linking group denoted by W in Formula (1) above include a straight chain, branched, or cyclic alkylene group, aralkylene group, or arylene group, which may have a substituent.

The alkylene group denoted by W is preferably an alkylene group having 1 to 10 carbons, and more preferably an alkylene group having 1 to 4 carbons. Specific examples include a methylene group, an ethylene group, a propyle group, a butylene group, a pentylene group, a hexylene group, an octylene group, and a decylene group, and among them a methylene group, an ethylene group, and a propylene group are particularly preferable.

The aralkylene group denoted by W is preferably an aralkylene group having 7 to 13 carbons. Specific examples include a benzylidene group and a cinnamylidene group.

The arylene group denoted by W is preferably an arylene group having 6 to 12 carbons. Specific examples include a phenylene group, a cumenylene group, a mesitylene group, a tolylene group, and a xylylene group, and among them a phenylene group is particularly preferable.

Furthermore, the divalent linking group denoted by W may comprise, within the linking group or at a terminal of the linking group, -COO-, -OCO-, -O-, or a group derived from a heterocycle.

W is preferably a single bond, an alkylene group having 1 to 8 carbons, an alkylene group having 1 to 8 carbons that comprises -COO- and/or -O- within the alkylene group or at a terminal of the alkylene group, or a 2-hydroxypropylene group.

J in Formula (1) above is preferably -COO- or a phenylene group.

Furthermore, n in Formula (1) above is preferably 0.

The polymeric dispersant comprising a constituent unit represented by Formula (1) may comprise a constituent unit other than the constituent unit represented by Formula (1) and is particularly preferably a graft copolymer comprising a constituent unit derived from a polymerizable oligomer (hereinafter, also simply called a 'polymerizable polymer') having an ethylenically unsaturated bond at a terminal. Such a polymerizable polymer having an ethylenically unsaturated bond at a terminal is also called a macromonomer since it is a compound having a predetermined molecular weight.

Furthermore, the polymeric dispersant having a constituent unit represented by Formula (1) is preferably a copolymer of the monomer having a pigment analogue residue and a monomer having an amino group and an ethylenically unsaturated bond. As the monomer having an amino group and an ethylenically unsaturated group, monomers described for (1) can be cited, and preferred embodiments are also the same.

Moreover, in the present invention, it is preferable to use a commercially available polymeric dispersant as the polymeric dispersant.

Specific examples of commercially available dispersants that can preferably be used as the polymeric dispersant include SOLSPERSE 24000SC, SOLSPERSE 24000GR, SOLSPERSE 32000, and SOLSPERSE 33000 manufactured by the Lubrizol Corporation, TEGO Dispers 685 manufactured by Evonic Industries, and Ajisper PB-711, Ajisper PB-821, and Ajisper PB-822 manufactured by Ajinomoto-Fine-Techno Co., Inc.

With regard to the polymeric dispersant used in the present invention, one type may be used or two or more types may be used in combination.

The content of the polymeric dispersant in the ink composition of the present invention is preferably 1 to 80 parts by mass relative to 100 parts by mass of the content of pigment PY184, more preferably 5 to 50 parts by mass, yet more preferably 10 to 40 parts by mass, and particularly preferably 10 to 30 parts by mass.

Furthermore, the content of the polymeric dispersant contained in the preliminary pigment dispersion before dispersing the pigment dispersion used in production of the ink composition is similarly preferably 1 to 80 parts by mass relative to 100 parts by mass of the content of pigment PY184, more preferably 5 to 50 parts by mass, yet more preferably 10 to 40 parts by mass, and particularly preferably 10 to 30 parts by mass.

When in this numerical range, an ink composition having a desired DV90 and good storage stability and coloration can be obtained.

### <Polymerizable compound>

The ink composition of the present invention comprises a polymerizable compound.

The polymerizable compound used in the ink composition of the present invention may be any of a radically polymerizable compound and a cationically polymerizable compound, and a radically polymerizable compound is preferably used.

### -Radically polymerizable compound-

The radically polymerizable compound is a compound having a radically polymerizable ethylenically unsaturated bond, may be any compound as long as it has at least one radically polymerizable ethylenically unsaturated bond in the molecule, and includes those having a chemical configuration such as monomer, oligomer, or polymer. With regard to the radically polymerizable compound, only one type may be used, or two or more types may be used in combination at any ratio in order to improve desired properties.

Examples of the polymerizable monomer having a radically polymerizable ethylenically unsaturated bond include a nitrogen-containing radically polymerizable compound such as an *N*-vinyl compound, acrylamide, or methacrylamide; an unsaturated carboxylic acid such as acrylic acid, methacrylic acid, itaconic acid, crotonic acid, isocrotonic acid, or maleic acid, an unsaturated carboxylic acid ester, or a salt thereof; an anhydride having an ethylenically unsaturated group; acrylonitrile; and styrene. Furthermore, various types of macromonomers such as an unsaturated polyester, an unsaturated polyether, an unsaturated polyamide, and an unsaturated polyurethane may also cited as examples.

Among them, the ink composition of the present invention preferably comprises a radically polymerizable compound selected from the group consisting of a (meth)acrylate compound, a vinyl ether compound, and an *N-*vinyl compound. The radically polymerizable compound is more preferably a radically polymerizable compound selected from the group consisting of a (meth)acrylate compound, a vinyl ether compound, and an *N*-vinyl compound. The notation '(meth)acrylate' might be used when either one of or both 'acrylate' and 'methacrylate' are referred to, and the notation '(meth)acrylic' might be used when either one of or both 'acrylic' and 'methacrylic' are referred to.

Preferred examples of the monofunctional compound include;
an *N*-vinyl compound such as *N*-vinylformamide, *N*-vinylcaprolactam, and *N*-vinylpyrrolidone;
a (meth)acrylamide compound such as (meth)acrylamide, *N-*methylol(meth)acrylamide, diacetone(meth)acrylamide, *N,N-*dimethyl(meth)acrylamide, *N,N*-diethyl(meth)acrylamide, *N-*isopropyl(meth)acrylamide, (meth)acryloylmorpholine, or (meth)acrylamide;
a (meth)acrylate compound such as 2-hydroxyethyl(meth)acrylate, butoxyethyl(meth)acrylate, carbitol(meth)acrylate, cyclohexyl(meth)acrylate, tetrahydrofurfuryl(meth)acrylate, benzyl(meth)acrylate, tridecyl(meth)acrylate, 2-phenoxyethyl(meth)acrylate, glycidyl(meth)acrylate, isobornyl(meth)acrylate, dicyclopentenyl(meth)acrylate, dicyclopentenyloxyethyl(meth)acrylate, dicyclopentanyl(meth)acrylate, 2-hydroxy-3-phenoxypropyl(meth)acrylate, 2-(meth)acryloyloxyethylphthalic acid, methoxy-polyethyleneglycol(meth)acrylate, 2-(meth)acryloyloxyethyl-2-hydroxyethylphthalic acid, 2-(2-ethoxyethyxy)ethyl(meth)acrylate, 2-methoxyethyl(meth)acrylate, 3-methoxybutyl(meth)acrylate, ethoxylated phenyl(meth)acrylate, 2-(meth)acryloyloxyethyl succinic acid, nonylphenol EO adduct (meth)acrylate, phenoxy-polyethyleneglycol(meth)acrylate, 2-(meth)acryloyloxyethylhexahydrophthalic acid, lactone modified (meth)acrylate, stearyl(meth)acrylate, isoamyl(meth)acrylate, isomyristyl(meth)acrylate, isostearyl(meth)acrylate, or cyclictrimethylolpropaneformal(meth)acrylate;
an allyl compound such as allylglycidyl ether;
a monofunctional vinyl ether compound. such as methyl vinyl ether, ethyl vinyl ether, n-propyl vinyl ether, isopropyl vinyl ether, n-butyl vinyl ether, isobutyl vinyl ether, *t*-butyl vinyl ether, n-octadecyl vinyl ether, 2-ethylhexyl vinyl ether, n-nonyl vinyl ether, dodecyl vinyl ether, octadecyl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethyl cyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, phenoxypolyethylene glycol vinyl ether, cyclohexane diemethanol monovinyl ether, and isopropenyl ether-O-propylene carbonate.

Moreover, it is preferable to comprise a polyfunctional (meth)acrylate compound as the radically polymerizable compound.

Examples of the polyfunctional (meth)acrylate compound include a glycol di(meth)acrylate compound such as ethylene glycol di(meth)acrylate, diethylene glycol di(meth)acrylate, triethylene glycol di(meth)acrylate, tetraethylene glycol di(meth)acrylate, polyethylene glycol (meth)acrylate, propylene glycol (meth)acrylate, dipropylene glycol di(meth)acrylate, tripropylene glycol di(meth)acrylate, tetrapropylene glycol di(meth)acrylate, polypropylene glycol di(meth)acrylate, ethoxylated neopentylglycol di(meth)acrylate, and propoxylated neopentylglycol di(meth)acrylate, a di- and trivinyl ether such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexane dimethanol divinyl ether, and trimethylol propane trivinyl ether, a bisphenol A di(meth)acrylate compound such as a bisphenol A diglycidyl ether (meth)acrylic acid adduct, a modified bisphenol A di(meth)acrylate, a PO adduct of bisphenol A di(meth)acrylate, or an EO adduct of bisphenol A di(meth)acrylate; an ester compound of a tri- or higher-hydric alcohol such as pentaerythritol tri(meth)acrylate, pentaerythritol tetra(meth)acrylate, dipentaerythritol tetra(meth)acrylate, trimethylolethane tri(meth)acrylate, trimethylolpropane tri(meth)acrylate, or tetramethylolmethane tetra(meth)acrylate, an allyl compound such as diallyl phthalate or triallyl trimellitate; and bis(4-(meth)acryloxypolyethoxyphenyl)propane can preferably be cited as examples. Here, PO means propylene oxide and EO means ethylene oxide.

More specifically, commercially available or industrially known radically polymerizable or crosslinking monomers, oligomers, and polymers, such as those described in 'Kakyozai Handobukku' (Crosslinking Agent Handbook), Ed. S. Yamashita (Taiseisha, 1981); 'UV/EB Koka Handobukku (Genryo)' (UV/EB Curing Handbook (Starting Materials)) Ed. K. Kato (Kobunshi Kankoukai, 1985); 'UV/EB Koka Gijutsu no Oyo to Shijyo' (Application and Market of UV/EB Curing Technology), p. 79, Ed. RadTech (CMC, 1989); and E. Takiyama 'Poriesuteru Jushi Handobukku' (Polyester Resin Handbook), (The Nikkan Kogyo Shimbun Ltd., 1988) may be used.

In particular, in the ink composition that is used for recording on a flexible recording medium such as a PET film or a PP film, it is preferable to use a monofunctional (meth)acrylate compound and a polyfunctional (meth)acrylate compound in combination since flexibility can be imparted to the film to thus enhance adhesion while increasing film strength.

The ink composition of the present invention may suitably employ an *N-*vinyllactam as the *N*-vinyl compound. Preferred examples of the *N*-vinyllactam include compounds represented by Formula (N) below.

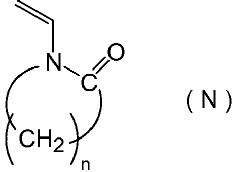

In Formula (N), n denotes an integer of 2 to 6; n is preferably an integer of 3 to 5 from the viewpoint of strechability after the ink composition is cured, adhesion to a recording medium, and ease of availability of starting material, n is more preferably an integer of 3 or 5, and n is particularly preferably 5, which is *N*-vinyl-ε-caprolactam. *N*-vinyl-ε-caprolactam is preferable since it has excellent safety, is commonly used and easily available at a relatively low price, and gives particularly good ink curability and adhesion of a cured film to a recording medium.

Furthermore, the *N*-vinyllactam may have a substituent such as an alkyl group or an aryl group and may have linked thereto a saturated or unsaturated ring structure.

The ink composition of the present invention preferably comprises a compound represented by Formula (c) as a radically polymerizable compound. 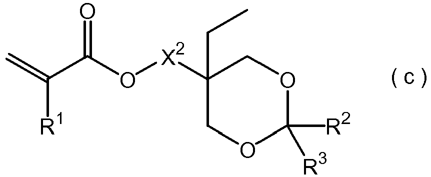 (In formula (c), R¹, R² and R³ independently denote a hydrogen atom, a methyl group, or an ethyl group, and X² denotes a single bond or a divalent linking group.)

R¹ is preferably a hydrogen atom or a methyl group, and more preferably a hydrogen atom.

R² and R³ are independently preferably a hydrogen atom or a methyl group, and more preferably a hydrogen atom, and it is yet more preferable that both R² and R³ are hydrogen atoms.

The divalent linking group denoted by X² is not particularly limited as long as the effects of the invention are not greatly impaired, and is preferably a divalent hydrocarbon group or a divalent group in which a hydrocarbon group and an ether bond are combined, and more preferably a divalent hydrocarbon group, poly(alkyleneoxy) group, or poly(alkyleneoxy)alkyl group. Furthermore, the number of carbons of the divalent linking group is preferably 1 to 60, and more preferably 1 to 20.

X² is preferably a single bond, a divalent hydrocarbon group, or a divalent group in which a hydrocarbon group and an ether bond are combined, more preferably a divalent hydrocarbon group having 1 to 20 carbons, yet more preferably a divalent hydrocarbon group having 1 to 8 carbons, and particularly preferably a methylene group.

Specific examples of the compound represented by Formula (c) are cited below, but it is not limited to these compounds. In the specific examples below, R denotes a hydrogen atom or a methyl group.

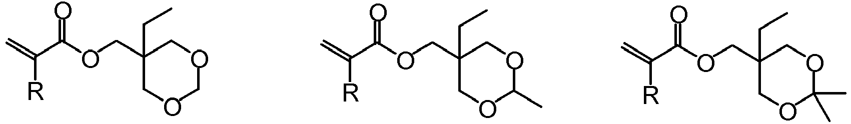

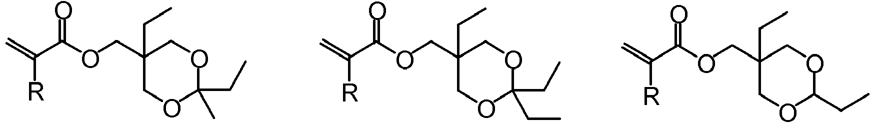

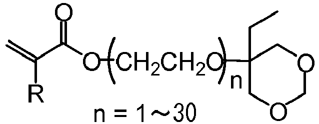

Among them, cyclic trimethylolpropane formal (meth)acrylate is preferable, and cyclic trimethylolpropane formal acrylate is particularly preferable. The compound represented by Fomula (c) may be a commercial product, and specific examples of the commercial product include SR531 (SARTOMER).

The ink composition of the present invention preferably comprises an oligomer having a radically polymerizable group. The radically polymerizable group is preferably an ethylenically unsaturated group, and more preferably a (meth)acryloxy group.

Examples of the oligomer having a radically polymerizable group include an olefin-based oligomer having a radically polymerizalbe group (an ethylene oligomer, a propylene oligomer, a butene oligomer, etc.), a vinyl-based oligomer having a radically polymerizable group (a styrene oligomer, a vinyl alcohol oligomer, a vinylpyrrolidone oligomer, an acrylate oligomer, methacrylate oligomer, etc.), a diene-based oligomer having a radically polymerizable group (a butadiene oligomer, a chloroprene rubber, a pentadiene oligomer, etc.), a ring-opening polymerization type oligomer having a radically polymerizable group (di-, tri-, tetra-ethylene glycol, polyethylene glycol, polyethylimine, etc.), an addition-polymerization type oligomer having a radically polymerizable group (an oligoester (meth)acrylate, a polyamide oligomer, a polyisocyanate oligomer), and an addition-condensation oligomer having a radically polymerizable group (a phenolic resin, an amino resin, a xylene resin, a ketone resin, etc.), etc. Among these an oligoester (meth)acrylate is preferable, and among them a urethane (meth)acrylate, a polyester (meth)acrylate, and an epoxy (meth)acrylate are more preferable, and a urethane (meth)acrylate is yet more preferable.

As the urethane (meth)acrylate, an aliphatic urethane (meth)acrylate and an aromatic urethane (meth)acrylate may preferably be cited, and an aliphatic urethane (meth)acrylate may more preferably be cited.

The urethane (meth)acrylate is preferably an tetra- or lower-functional urethane (meth)acrylate, and more preferably di- or lower-functional urethane (meth)acrylate.

The ink composition having excellent curability and adhesion to the substrate can be obtained by comprising the urethane (meth)acrylate.

With regard to the oligomer, 'Origomar Handobukku (Oligomer Handbook)' (edited by Junji Furukawa, The Chemical Daily Co., Ltd.) may also be referred to.

Examples of oligomer commercial products include compounds as follows.

Examples of urethane (meth)acrylates include R1204, R1211, R1213, R1217, R1218, R1301, R1302, R1303, R1304, R1306, R1308, R1901, and R1150 manufactured by Dai-Ichi Kogyo Seiyaku Co., Ltd., the EBECRYL series (e.g. EBECRYL 230, 270, 4858, 8402, 8804, 8807, 8803, 9260, 1290, 1290K, 5129, 4842, 8210, 210, 4827, 6700, 4450, and 220) manufactured by Daicel-Cytec Company Ltd., NK Oligo U-4HA, U-6HA, U-15HA, U-108A, and U200AX manufactured by Shin-Nakamura Chemical Co., Ltd., and Aronix M-1100, M-1200, M-1210, M-1310, M-1600, and M-1960 manufactured by Toagosei Co., Ltd.

Examples of polyester (meth)acrylates include the EBECRYL series (e.g. EBECRY L770, IRR467, 81, 84, 83, 80, 675, 800, 810, 812, 1657, 1810, IRR302, 450, 670, 830, 870, 1830, 1870, 2870, IRR267, 813, IRR483, 811, etc.) manufactured by Daicel-Cytec Company Ltd., and Aronix M-6100, M-6200, M-6250, M-6500, M-7100, M-8030, M-8060, M-8100, M-8530, M-8560, and M-9050 manufactured by Toagosei Co., Ltd.

Examples of epoxy (meth)acrylates include the EBECRYL series (e.g. EBECRYL 600, 860, 2958, 3411, 3600, 3605, 3700, 3701, 3703, 3702, 3708, RDX63182, 6040, etc.) manufactured by Daicel-Cytec Company Ltd.

With regard to the oligomer having a radically polymerizable group, one type may be used on its own or two or more types may be used in combination.

The content of the oligomer having a radically polymerizable group in the ink composition of the present invention is preferably 0.1 to 50 mass % relative to the total mass of the ink composition, more preferably 0.5 to 20 mass %, and yet more preferably 1 to 10 mass %.

### -Cationically polymerizable compound-

The cationically polymerizable compound that can be used in the present invention is not particularly limited as long as it is a compound that is made to undergo a cationic polymerization reaction by means of a cationic polymerization initiating species, etc., and cures; any type of monomer, oligomer, or polymer may be used, and in particular various known cationically polymerizable monomers known as a photocationically polymerizable monomers, which are made to undergo a polymerization reaction by means of an initiating species formed from a cationic polymerization initiator, which is described later, may be used. Moreover, the cationically polymerizable compound may be a monofunctional compound or a polyfunctional compound.

With regard to the polymerizable compound in the ink composition of the present invention, only one type may be used or two or more types may be used in combination.

The total content of the polymerizable compound in the ink composition of the present invention is preferably 30 to 98 mass % relative to the total mass of the ink composition, more preferably 40 to 95 mass %, and yet more preferably 50 to 90 mass %. When in this range, curability is excellent and the viscosity is appropriate.

The ink composition of the present invention preferably comprises as the polymerizable compound at least one compound selected from the group consisting of *N*-vinylcaprolactam, cyclic trimethylolpropaneformal acrylate, and 2-phenoxyethyl acrylate, more preferably comprises *N*-vinylcaprolactam and/or cyclic trimethylolpropaneformal acrylate, yet more preferably comprises N-vinylcaprolactam and cyclic trimethylolpropaneformal acrylate, and particularly preferably comprises *N*-vinylcaprolactam, cyclic trimethylolpropaneformal acrylate, and 2-phenoxyethyl acrylate.

Due to *N*-vinylcaprolactam and cyclic trimethylolpropaneformal acrylate being contained as the polymerizable compounds, an ink composition having excellent curability and stability can be obtained.

The ink composition of the present invention preferably comprises N-vinylcaprolactam at 5 to 30 mass %, more preferably 5 to 20 mass %, and yet more preferably 10 to 20 mass %. It is preferable for the content of N-vinylcaprolactam to be within this range since substrate adhesion and curability are excellent.

Furthermore, the ink composition of the present invention preferably comprises cyclic trimethylolpropaneformal acrylate at 5 to 50 mass %, more preferably 10 to 40 mass %, and yet more preferably 20 to 40 mass %. It is preferable for the content of cyclic trimethylolpropaneformal acrylate to be within this range from the viewpoint of achieving a balance between suppression of discoloration over time of a cured film and improvement of adhesion to a substrate.

Moreover, the ink composition of the present invention preferably comprises 2-phenoxyethyl acrylate at 5 to 60 mass %, more preferably 10 to 50 mass %, and yet more preferably 10 to 40 mass %. It is preferable for the content of 2-phenoxyethyl acrylate to be within this range from the viewpoint of adhesion to a substrate and suppression of film cracking.

The ink composition of the present invention preferably comprises N-vinylcaprolactam, cyclic trimethylolpropaneformal acrylate, and 2-phenoxyethyl acrylate in total at 10 to 90 mass % of the entire ink composition, more preferably 20 to 90 mass %, and yet more preferably 30 to 90 mass %. It is preferable for the total content of *N*-vinylcaprolactam, cyclic trimethylolpropaneformal acrylate, and 2-phenoxyethyl acrylate to be within this range since a cured film that is preferable in terms of adhesion to a substrate, curability, suppression of discoloration over time of the cured film, and suppression of film cracking can be formed.

### <Polymerization initiator>

The ink composition of the present invention comprises a polymerization initiator.

As the polymerization initiator that can be used in the present invention, a known polymerization initiator may be used.

The polymerization initiator that can be used in the present invention may be used singly or in a combination of two or more types. Furthermore, a radical polymerization initiator and a cationic polymerization initiator may be used in combination.

The polymerization initiator that can be used in the ink composition of the present invention is a compound that forms a polymerization initiating species by absorbing external energy. The external energy used for initiating polymerization can be broadly divided into heat and actinic radiation, and a thermal polymerization initiator and a photopolymerization initiator are used respectively. Preferred examples of the actinic radiation include γ rays, an electron beam, ultraviolet rays, visible light, and infrared rays, an electron beam and ultraviolet rays are preferable, and ultraviolet rays are more preferable.

### -Radical polymerization initiator-

A radical polymerization initiator used in the present invention is not particularly limited, and any known radical polymerization initiator may be used. A radical photopolymerization initiator is preferable as the radical polymerization initiator.

Examples of the radical polymerization initiator that can be used in the present invention include (a) an aromatic ketone, (b) an acylphosphine compound, (c) an aromatic onium salt compound, (d) an organic peroxide, (e) a thio compound, (f) a hexaarylbiimidazole compound, (g) a ketoxime ester compound, (h) a borate compound, (i) an azinium compound, (j) a metallocene compound, (k) an active ester compound, (I) a compound having a carbon-halogen bond, and (m) an alkylamine compound. With regard to these radical polymerization initiators, the above-mentioned compounds (a) to (m) may be used singly or in combination.

Among them, it is preferable to use the aromatic ketone (a), the acylphosphine compound (b), and the thio compound (e).

In addition, the radical polymerization initiator in the present invention includes not only a compound that absorbs external energy such as actinic radiation to thus form a radical polymerization initiating species but also a compound that absorbs specific actinic radiation to thus promote decomposition of a radical polymerization initiator (a so-called sensitizer).

As the aromatic ketone (a), an α-hydroxyketone compound and an α-aminoketone compound are preferable.

Examples of the α-hydroxyketone compound include 1-[4-(2-hydroxyethoxy)phenyl]-2-hydroxy-2-methyl-1-propan-1-one, 2-hydroxy-2-methyl-1-phenyl-propan-1-one, and 1-hydroxycyclohexyl phenyl ketone.

Examples of the α-aminoketone compound include 2-methyl-1-phenyl-2-morpholinopropan-1-one, 2-methyl-1-[4-(hexyl)phenyl]-2-morpholinopropan-1-one, and 2-ethyl-2-dimethylamino-1-(4-morpholinophenyl)-butan-1-one.

The acylphosphine compound (b) is preferably an acylphosphine oxide compound.

Preferred examples of the acylphosphine oxide compound include a monoacylphosphine oxide compound and a bisacylphosphine oxide compound.

As the monoacylphosphine oxide compound, a known monoacylphosphine oxide compound may be used. Examples thereof include monoacylphosphine oxide compounds described in JP-B-60-8047 and JP-B-63-40799.

As the bisacylphosphine oxide compound, a known bisacylphosphine oxide compound may be used. Examples thereof include bisacylphosphine oxide compounds described in JP-A-3-101686, JP-A-5-345790, and JP-A-6-298818.

Preferred examples of the thio compound (e) include a compound having a benzophenone skeleton or a compound having a thioxanthone skeleton described in 'RADIATION CURING IN POLYMER SCIENCE AND TECHNOLOGY' J. P. FOUASSIER J. F. RABEK (1993), pp. 77 to 117.

The ink composition of the present invention preferably comprises as the polymerization initiator at least one compound selected from the group consisting of an aromatic ketone, an acylphosphine oxide compound, and a thioxanthone, and more preferably comprises bisacylphosphine oxide and/or a thioxanthone compound. When used in this combination, an ink composition having excellent curability can be obtained.

### -Cationic polymerization initiator-

As the cationic polymerization initiator (photo-acid generator) that can be used in the present invention, for example, a compound that is used in a chemically amplified photoresist or photocationic polymerization may be used ('Organic Materials for Imaging', Ed. by Japanese Research Association for Organic Electronics Materials, Bunshin Publishing (1993), pp. 187-192).

The total content of the polymerization initiator in the ink composition of the present invention is preferably 0.1 to 20.0 mass % relative to the total mass of the ink composition, more preferably 0.5 to 18.0 mass %, and yet more preferably 1.0 to 15.0 mass %. When the amount of polymerization initiator added is within this numerical range, curability is excellent, and it is appropriate from the viewpoint of suppression of surface tackiness.

Furthermore, the content ratio (ratio by mass) of the polymerization initiator and the polymerizable compound in the ink composition of the present invention is preferably polymerization initiator:polymerizable compound = 0.5:100 to 30:100, more preferably 1:100 to 15:100, and yet more preferably 2:100 to 10:100.

The ink composition of the present invention preferably comprises as the polymerization initiator a compound that functions as a sensitizer (hereinafter, also called simply a sensitizer) in order to promote decomposition of the polymerization initiator by absorbing specific actinic radiation.

Examples of the sensitizer include a polynuclear aromatic compound (e.g. pyrene, perylene, triphenylene, 2-ethyl-9,10-dimethoxyanthracene, etc.), a xanthene (e.g. fluorescein, eosin, erythrosine, Rhodamine B, Rose Bengal, etc.), a cyanine (e.g. thiacarbocyanine, oxacarbocyanine, etc.), a merocyanine (e.g. merocyanine, carbomerocyanine, etc.), a thiazine (e.g. thionine, methylene blue, toluidine blue, etc.), an acridine (e.g. acridine orange, chloroflavine, acriflavine, etc.), an anthraquinone (e.g. anthraquinone, etc.), a squarium (e.g. squarium, etc.), and a coumarin (e.g. 7-diethylamino-4-methylcoumarin, etc.).

From the viewpoint of ink coloration, the content of the sensitizer in the ink composition of the present invention is preferably 0.01 to 20 mass % relative to the total mass of the ink composition, more preferably 0.1 to 15 mass %, and yet more preferably 0.5 to 10 mass %.

With regard to the sensitizer, one type may be used on its own or two or more types may be used in combination.

Furthermore, from the viewpoint of improvement of decomposition of the polymerization initiator and transparency to applied light, the content ratio of the sensitizer and the polymerization initiator in the ink composition as a ratio by mass is preferably polymerization initiator content/sensitizer content = 100 to 0.5, more preferably 50 to 1, and yet more preferably 10 to 1.5.

### <Other components>

The ink composition of the present invention may comprise as necessary in addition to the above components a surfactant, a co-sensitizer, a UV absorber, an antioxidant, an antifading agent, a conductive salt, a solvent, a polymer compound, a basic compound, etc. They are described in JP-A-2009-221416 and may also be used in the present invention. Needless to say the total content of components contained the ink composition of the present invention does not exceed 100 mass %.

Furthermore, from the viewpoint of storage properties and suppression of head clogging, the ink composition of the present invention preferably comprises a polymerization inhibitor.

The polymerization inhibitor is preferably added at 200 to 20,000 ppm relative to the total amount of the ink composition.

Examples of the polymerization inhibitor include a nitroso-based polymerization inhibitor, a hindered amine-based polymerization inhibitor, hydroquinone, benzoquinone, *p*-methoxyphenol, TEMPO (2,2,6,6-tetramethylpiperidine-1-oxyl), TEMPOL (4-hydroxy-2,2,6,6-tetramethylpiperidine-1-oxyl), and Al cupferron.

### <Properties of ink composition>

In the present invention, in consideration of discharging properties, it is preferable to use an ink composition having a viscosity at 25°C of no more than 40 mPa·s, more preferably 5 to 40 mPa·s, and yet more preferably 7 to 30 mPa·s. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the ink composition of the present invention, it is preferable that its component ratio is appropriately adjusted so that the viscosity is in the above-mentioned range. When the viscosity at room temperature is set to be high, even when a porous recording medium (support) is used, penetration of the ink composition into the recording medium can be prevented, and uncured monomer can be reduced. Furthermore, ink spreading when droplets of ink composition have landed can be suppressed, and as a result there is the advantage that the image quality is improved.

The surface tension of the ink composition of the present invention at 25°C is preferably 20 to 35 mN/m, and more preferably 23 to 33 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 35 mN/m.

### (Process for producing radiation-curable inkjet ink composition)

The process for producing a radiation-curable inkjet ink composition of the present invention (hereinafter, also called a 'process for producing an ink composition') comprises a pigment dispersion step of subjecting a preliminary pigment dispersion comprising PY184 at 20 to 50 mass% and a polymeric dispersant to a pigment dispersion treatment to thus prepare a pigment dispersion, and a dilution step of mixing the pigment dispersion and a liquid comprising at least a polymerizable compound and a polymerization initiator to thus produce a radiation-curable inkjet ink composition comprising PY184 at a content of 2 to 10 mass%.

The process for producing an ink composition of the present invention preferably comprises a step of preparing a preliminary pigment dispersion having a pigment concentration (PY184 content) of 20 to 50 mass % by mixing PY184 and a liquid comprising a polymeric dispersant (hereinafter, also called a 'preliminary dispersion step'). That is, the process for producing an ink of the present invention preferably comprises the preliminary dispersion step, the pigment dispersion step, and the dilution step.

In the pigment dispersion step of the process for producing an ink composition of the present invention, a pigment dispersion having a desired DV90 is obtained by subjecting a preliminary pigment dispersion having a high pigment concentration of 20 to 50 mass% to a dispersion treatment, and in the dilution step dilution can be carried out to give an ink composition having a desired pigment concentration of 2 to 10 mass%.

In accordance with the production process, an inkjet ink composition having a desired DV90 for PY184 and having excellent storage stability can easily be obtained, the pigment dispersion to be used in the production of the ink composition has excellent flowability and ease of handling, the ink composition can be produced stably and, furthermore, the production time for the ink composition, in particular the dispersion time for the pigment, can be shortened.

The preliminary dispersion step, the pigment dispersion step, and the dilution step are explained below.

### <Preliminary dispersion step>

The process for producing an ink composition of the present invention preferably comprises a step (preliminary dispersion step) of preparing a preliminary pigment dispersion having a PY184 content (pigment concentration) of 20 to 50 mass % by mixing PY184 and a liquid comprising a polymeric dispersant.

The content of PY184 is preferably 20 to 50 mass % relative to the total mass of the preliminary pigment dispersion, more preferably 20 to 45 mass %, and particularly preferable 25 to 45 mass %.

As the PY184 and the polymeric dispersant used in the preliminary dispersion step, those described above may preferably be used.

The preliminary pigment dispersion preferably comprises as necessary a dispersion solvent having a viscosity at 25°C of 2 to 30 mPa·s.

The dispersion solvent is preferably a liquid at 25°C, and from the viewpoint of obtaining a uniform dispersion it is preferable for the liquid to have a relatively low viscosity, preferably 2 to 30 mPa·s at 25°C, and yet more preferably 2 to 15 mPa·s. From the viewpoint of eliminating residual solvent of a printed material, the dispersion solvent is preferably a polymerizable monomer.

Among polymerizable monomers as dispersion solvents, a monofunctional (meth)acrylate monomer may preferably be used due to its low viscosity. Furthermore, since high shear might be applied to the pigment during dispersion, an active species that causes polymerization could be generated, and this might cause polymerization of the polymerizable monomer in the dispersion solvent, thus increasing the viscosity. In this case, since a monofunctional monomer can keep the increase in viscosity at a low level, a monofunctional (meth)acrylate monomer is preferable.

Specific examples of the dispersion solvent that can preferably be used include 2-hydroxyethyl (meth)acrylate, butoxyethyl (meth)acrylate, carbitol (meth)acrylate, cyclohexyl (meth)acrylate, tetrahydrofurfuryl (meth)acrylate, benzyl (meth)acrylate, tridecyl (meth)acrylate, cyclic trimethylolpropaneformal (meth)acrylate, 2-phenoxyethyl (meth)acrylate, glycidyl (meth)acrylate, isobornyl (meth)acrylate, dicyclopentenyl (meth)acrylate, dicyclopentenyloxyethyl (meth)acrylate, dicyclopentanyl (meth)acrylate, 2-hydroxy-3-phenoxypropyl (meth)acrylate, 2-(meth)acryloyloxyethylphthalic acid, methoxypolyethylene glycol (meth)acrylate, 2-(meth)acryloyloxyethyl-2-hydroxyethylphthalic acid, 2-(2-ethoxyethoxy)ethyl (meth)acrylate, 2-methoxyethyl (meth)acrylate, 3-methoxybutyl (meth)acrylate, ethoxylated phenyl (meth)acrylate, 2-(meth)acryloyloxyethylsuccinic acid, a nonylphenol EO adduct (meth)acrylate, phenoxypolyethylene glycol (meth)acrylate, 2-(meth)acryloyloxyethylhexahydrophthalic acid, a lactone-modified (meth)acrylate, stearyl (meth)acrylate, isoamyl (meth)acrylate, isomyristyl (meth)acrylate, isostearyl (meth)acrylate, 1,6-hexanediol di(meth)acrylate, and cyclic trimethylolpropaneformal (meth)acrylate. Among them, cyclic trimethylolpropaneformal (meth)acrylate, 2-phenoxyethyl (meth)acrylate, isobornyl (meth)acrylate, cyclohexyl (meth)acrylate, tetrahydrofurfuryl (meth)acrylate, benzyl (meth)acrylate, tridecyl (meth)acrylate, 1,6-hexanediol di(meth)acrylate, and cyclic trimethylolpropaneformal (meth)acrylate are particularly preferable.

Stirring means in the preliminary dispersion step is not particularly limited, and from the viewpoint of eliminating the need for a washing step, a method employing a mixer equipped with a stirring blade or a magnetic stirrer, etc. is easy and efficient means. In order to carry out production of a large amount and in a shorter period of time, a mixer equipped with a stirring blade is suitably used.

As a container used for stirring, a batch system and a continuous system are available as commercial products, and the latter can produce a uniform preliminary dispersion in a shorter period of time.

Furthermore, as the type of stirring blade, a propeller type, an axial turbine type, a radial turbine type, an anchor type, etc. may suitably be used. Other than the above, a mixer such as a serrated blade, a closed rotor, or a rotor/stator may be used.

Specific examples include a rotor/stator mixer (batch system container) from Silverson, UK.

Dispersion conditions in the preliminary dispersion step may be appropriately adjusted according to the starting materials used, stirring means, the state of the preliminary dispersion obtained, etc.

Furthermore, in the preliminary dispersion step, it is preferable to mix a polymerization inhibitor to give a preliminary dispersion. As the polymerization inhibitor used in the preliminary dispersion step, those described above may preferably be used.

### <Pigment dispersion step>

The process for producing an ink composition of the present invention preferably comprises a pigment dispersion step of subjecting the preliminary pigment dispersion to a pigment dispersion treatment to thus prepare a pigment dispersion.

The pigment dispersion treatment in the pigment dispersion step may employ various known dispersion means and, for example, a dispersion device such as a ball mill, a sand mill, an attritor, a roll mill, a jet mill, a homogenizer, a paint shaker, a kneader, an agitator, a Henschel mixer, a colloid mill, an ultrasonic homogenizer, a pearl mill, a wet type jet mill, or a bead mill may suitably be used. Among them, it is more preferable to use dispersion equipment using media such as balls or beads, and it is yet more preferable to use bead mill dispersion equipment.

Dispersion conditions in the pigment dispersion step may be appropriately adjusted according to the starting material used, dispersion means, the state of the pigment dispersion obtained, etc.

Furthermore, the content of PY184 pigment in the pigment dispersion is preferably 20 to 50 mass %, more preferably 20 to 45 mass %, and particularly preferably 25 to 45 mass %.

### <Dilution step>

The process for producing an ink composition of the present invention preferably comprises a dilution step of mixing the pigment dispersion prepared in the pigment dispersion step and a liquid comprising at least a polymerizable compound and a polymerization initiator to thus produce a radiation-curable inkjet ink composition having a content of PY184 of 2 to 10 mass %.

The dilution step referred to here is a step of mixing the liquid as a dispersion medium with a pigment dispersion (also called a 'mill base', a 'conc. ink', etc.) prepared in advance at a higher pigment concentration than that of the final product to thus decrease the pigment concentration. Since an ink composition is usually produced by carrying out the dilution step after producing the mill base and storing it for a few hours to a few months, it is preferable to stir the stored mill base by applying a certain degree of shear (force) for a sufficient time. It is possible to completely disintegrate a pigment aggregate formed during storage by carrying out the dilution step, thus suppressing the concentration of coarse particles in the ink composition to a low level to give good inkjet discharge properties, and when the ink composition is filtered, it can be carried out easily.

In the dilution step, the radically polymerizable compound or the cationically polymerizable compound, which are polymerizable compounds described above, may suitably be used as the dilution solvent.

In the dilution step, it is preferable that a liquid in which a polymerization initiator has been dissolved or dispersed in the polymerizable compound used in dilution is prepared, and the pigment dispersion (mill base) and the liquid comprising the polymerizable compound and the polymerization initiator are mixed, thus giving a radiation-curable yellow ink composition having a content of PY184 of 2 to 10 mass%.

Furthermore, in the dilution step, components of the ink composition other than the polymerizable compound and the polymerization initiator may be added and dissolved as necessary.

Stirring means in the dilution step is not particularly limited as long as the pigment dispersion can be dissolved and diluted in the polymerizable compound, and the same means as those described for the preliminary dispersion step are preferably used.

The process for producing an ink composition of the present invention may further comprise a known step such as a step of filtering the ink composition.

### (Inkjet recording method, inkjet recording equipment, and printed material)

The inkjet recording method of the present invention is preferably a method for forming an image by discharging onto a recording medium for inkjet recording (support, recording material, building material, etc.) the radiation-curable inkjet ink composition of the present invention, and irradiating the radiation-curable inkjet ink composition discharged onto the recording medium with actinic radiation to thus cure the inkjet ink composition.

More specifically, the inkjet recording method of the present invention comprises (a¹) a step of discharging onto a recording medium the radiation curable inkjet ink composition of the present invention, and, (b¹) a step of curing the ink composition by irradiating the discharged radiation curable inkjet ink composition with actinic radiation.

The inkjet recording method of the present invention comprises the steps (a¹) and (b¹) above and thus forms an image from the inkjet ink composition cured on the recording medium.

The printed material of the present invention is preferably recorded by the inkjet recording method of the present invention.

The inkjet recording device described in detail below can be used in the step (a¹) of the inkjet recording method of the present invention.

### <Inkjet recording device>

An inkjet recording device used in the inkjet recording method of the present invention is not particularly limited, and any known inkjet recording device that can achieve an intended resolution may be used. That is, any known inkjet recording device, such as a commercial product, may be used in order to discharge an ink composition onto a recording medium in step (a¹) of the inkjet recording method of the present invention.

The inkjet recording device that can be used in the present invention is equipped with, for example, an ink supply system, a temperature sensor, and an actinic radiation source.

The ink supply system comprises, for example, a main tank containing the ink composition of the present invention, a supply pipe, an ink supply tank immediately before an inkjet head, a filter, and a piezo system inkjet head. The piezo system inkjet head may be driven so as to discharge a multisize dot of preferably 1 to 100 pL, more preferably 8 to 30 pL, at a resolution of preferably 320 x 320 to 4,000 x 4,000dpi, more preferably 400 x 400 to 1,600 x 1,600dpi, and yet more preferably 720 x 720 dpi. Here, dpi referred to in the present invention means the number of dots per 2.54 cm.

As described above, since it is desirable for the ink composition of the present invention to be discharged at a constant temperature, the inkjet recording device is preferably equipped with a temperature stabilizer for stabilizing the temperature of the ink composition. Parts to be controlled to a constant temperature include all of the supply pipe system and the members from the ink tank (including an intermediate tank if it is provided) to the discharging face of the nozzle. A section from the ink supply tank to the inkjet head is thermally insulated and heated.

A method of controlling temperature is not particularly limited, but it is preferable to provide, for example, temperature sensors at a plurality of pipe section positions, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

The ink composition of the present invention is preferably discharged using the above mentioned inkjet recording device after being heated to preferably 25°C to 80°C, and more preferably 25°C to 50°C, so as to reduce the viscosity of the ink composition to preferably 3 to 15 mPa·s, and more preferably 3 to 13 mPa·s. In particular, it is preferable to use the ink composition having an ink viscosity at 25°C of not more than 50 mPa·s since a good dischargeability can be obtained, and it is more preferable to use the ink composition having an ink viscosity at 25°C of not more than 5 to 30 mPa·s. By employing this method, high discharge stability can be realized.

The radiation curable inkjet ink composition such as the ink composition of the present invention generally has a viscosity that is higher than that of a water-based ink composition used for an inkjet recording ink, and variation in viscosity due to a change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature of ink composition is preferably ±5°C of a set temperature, more preferably ±2°C of the set temperature, and yet more preferably ±1 °C of the set temperature.

The step (b¹) of curing the ink composition by irradiating the discharged ink composition with actinic radiation is now explained.

The ink composition discharged onto the recording medium cures upon exposure to actinic radiation. This is due to a initiating species such as a radical or an acid being generated by decomposition of the radical polymerization initiator contained in the ink composition of the present invention by irradiation with actinic radiation, the initiating species functioning so as to make a polymerization reaction of a polymerizable compound take place and to promote it. In this process, if a sensitizer is present together with the polymerization initiator in the ink composition, the sensitizer in the system absorbs actinic radiation, becomes excited, and promotes decomposition of the polymerization initiator by contact with the polymerization initiator, thus enabling a curing reaction with higher sensitivity to be achieved.

The actinic radiation used in this process may include α rays, γ rays, an electron beam, X rays, UV rays, visible light, and IR rays. Although it depends on the absorption characteristics of the sensitizer, the peak wavelength of the actinic radiation is, for example, 200 to 600 nm, preferably 300 to 450 nm, more preferably 320 to 420 nm, and yet more preferably 340 to 400.

Furthermore, the polymerization initiation system of the ink composition of the present invention has sufficient sensitivity for low output actinic radiation. The actinic radiation is applied therefore so that the illumination intensity on the exposed surface is, for example, 10 to 4,000 mW/cm², and preferably 20 to 2,500 mW/cm².

As an actinic radiation source, a mercury lamp, a gas/solid laser, etc. are mainly used, and for UV curable inkjet ink composition a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocurable inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, the example of the LED includes a LED, disclosed in US Pat. No. 6,084,250, that can emit actinic radiation whose wavelength is centered between 300 nm and 370 nm. Furthermore, another violet LED is available, and irradiation can be carried out with radiation of a different UV bandwidth. The actinic radiation source preferable in the present invention is a UV-LED, and a UV-LED having a peak wavelength at 340 to 400 nm is particularly preferable.

The maximum illumination intensity of the LED on a recording medium is preferably 10 to 2,000 mW/cm², more preferably 20 to 1,000 mW/cm², and particularly preferably 50 to 800 mW/cm².

The ink composition of the present invention is desirably exposed to such actinic radiation for preferably 0.01 to 120 sec., more preferably 0.1 to 90 sec.

Irradiation conditions and a basic method for irradiation with actinic radiation are disclosed in JP-A-60-132767. Specifically, a light source is provided on either side of a head unit that includes an ink discharge device, and the head unit and the light source are made to scan by a so-called shuttle system. Irradiation with actinic radiation is carried out after a certain time (preferably 0.01 to 0.5 sec., more preferably 0.01 to 0.3 sec., and particularly preferably 0.01 to 0.15 sec.) has elapsed from when the ink composition has landed. By controlling the time from ink composition landing to irradiation so as to be a minimum in this way, it becomes possible to prevent the ink composition that has landed on a recording medium from spreading before being cured. Furthermore, since the ink composition can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light. These curing methods can be applied to the inkjet recording method of the present invention.

By employing such an inkjet recording method as described above, it is possible to maintain a uniform dot diameter for landed ink even for various types of recording medium having different surface wettability, thereby improving the image quality. In order to obtain a color image, it is preferable to superimpose colors in order from those with a high lightness. By superimposing inks in order from one with high lightness, it is easy for radiation to reach a lower ink, the curing sensitivity is good, the amount of residual monomer decreases, and an improvement in adhesion can be expected. Furthermore, although it is possible to discharge all colors and then expose them at the same time, it is preferable to expose one color at a time from the viewpoint of promoting curing.

In this way, the ink composition of the present invention may be cured by irradiation with actinic radiation in high sensitivity and form an image on the surface of the recording medium.

It is preferable for the ink composition of the present invention to be used as an ink set comprising a plurality of inkjet ink compositions.

In the inkjet recording method of the present invention, the order in which colored ink compositions are discharged is not particularly limited, but it is preferable to apply to a recording medium from a colored ink composition having a high lightness; when the ink compositions of yellow (the ink composition of the present invention), cyan, magenta, and black are used, they are preferably applied on top of the recording medium in the order yellow (the ink composition of the present invention), cyan, magenta, and black. Furthermore, when white is additionally used, they are preferably applied on top of the recording medium in the order white, yellow (the ink composition of the present invention), cyan, magenta, black. Moreover, the present invention is not limited thereto, and an ink set comprising a total of seven colors, that is, yellow (the ink composition of the present invention), light cyan, light magenta, cyan, magenta, gray, black, and white ink compositions may preferably be used, and in this case they are applied on top of the recording medium in the order white, light cyan, light magenta, yellow (the ink composition of the present invention), cyan, magenta, and black.

In the present invention, the recording medium is not particularly limited, and a recording medium known as a support and a recording material may be used. Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above-mentioned metal.

Furthermore, as the recording medium in the present invention a building material may preferably be used. Specific examples of the building material include flooring materials (e.g. sheet materials such as solid sheet or laminated sheet; tiles of natural stone, glass, porcelain, stainless steel, metal, etc.; cork flooring; sheet flooring such as linoleum or vinyl; paving materials such as stone, block, or brick), wall materials (e.g. sidings such as metal siding and wood siding; exterior materials such as exterior wood, sheet building material, exterior film material, external wall finishing material, and exterior finishing material; interior materials such as interior finishing material, design material, decorative sheets, and wooden interior materials; exterior louvers such as panel louvers, screens, and decorative louvers; building-enclosing wall faces such as fencing materials and blocks; wallpaper, sliding doors, sliding screens), roofing materials (clay tiles, metal tiles, aluminum, asphalt shingles, copper sheet, etc.), and ceiling materials. Among them, use is preferably in a building material that requires weatherability.

### Examples

The present invention is explained below more specifically by reference to Examples and Comparative Examples. However, the present invention should not be construed as being limited by these Examples. 'Parts' in the description below means 'parts by mass' unless otherwise specified.

### <Synthetic Example of polymeric dispersant (synthetic dispersants A to E) >

Synthetic dispersants A to E used in the present Examples were synthesized by the procedure below.

A monomer mixed liquid containing amine monomer 1 (8.0 parts), oligomer 1 (16.0 parts), and methyl ethyl ketone (30.0 parts) was introduced into a nitrogen gas-flushed 3-necked flask, stirred using a stirrer with which the flask was equipped, and heated to 65°C while making nitrogen gas flow through the interior of the flask.

First step: 0.06 parts of V-65 (polymerization initiator, 2,2'-azobis(2,4-dimethylvaleronitrile), Wako Pure Chemical Industries, Ltd.) was added to the mixed liquid, and stirring was carried out while heating at 65°C for 1 hour.

Second step: a further 0.06 parts of V-65 was added, and stirring was carried out while heating at 65°C for a further 1 hour.

The reaction solution thus obtained was poured into 659 parts of hexane while stirring, and a precipitate thus formed was dried by heating, thus giving synthetic dispersant A.

By changing the amount of V-65 added and the heating time as appropriate, synthetic dispersants B to E having different molecular weights were prepared.

The results of measuring the weight-average molecular weight (polystyrene basis) of each polymer synthesized (synthetic dispersant) by GPC are as shown in Table 13.

The starting materials used in the syntheses were as follows. Amine monomer 1: 3-dimethylaminopropylacrylamide (Kohjin Co., Ltd.) Oligomer 1: poly(methyl methacrylate) macromonomer having a methacryloyl group at a terminal, product name: AA-6 (Toagosei Co., Ltd.)

### (Examples 1 to 6 and Comparative Examples 1 and 2)

### <Preparation of pigment dispersions A to H >

Of the formulations of pigment dispersions A to H described in Table 1 below, components other than the pigment were stirred in a mixer manufactured by SILVERSON (10 to 15 minutes, 2,000 to 3,000 rpm), thus giving uniform transparent liquids (dispersant dilution liquids) A1 to H1. The pigment was added to this transparent liquid A1, and further stirring was carried out using a mixer (10 to 20 minutes, 2,000 to 3,000 rpm), thus giving 100 parts of uniform preliminary pigment dispersion A. Subsequently, dispersion was carried out using a circulating bead mill (Laboratory Mini Mill) manufactured by EIGER. Dispersion conditions were such that 100 parts of zirconia beads having a diameter of 0.65 mm was charged, the peripheral speed was 15 m/s, and the dispersion time was 3 hours, and pigment dispersion A was obtained. Pigment dispersions B to H were prepared similarly. Dispersion exceeding 3 hours makes the production time long and is not preferable in practice. These pigment dispersions are also called 'mills' or 'pigment dispersion liquids'. The values in the table below are given as parts by mass.

**Table 1**

| | | Dispersion | | | | | | | |
|---|---|---|---|---|---|---|---|---|---|
| | | A | B | C | D | E | F | G | H |
| Pigment | Sicopal L1100 | 40 | 20 | 15 | 3 | - | - | - | - |
| | Sicopal L1120 | - | - | - | - | 40 | 20 | 15 | 3 |
| Dispersant | Sol32000 | 12 | 6 | 4.5 | - | 12 | 6 | 4.5 | - |
| | BYK168 | - | - | - | 3 | - | - | - | 3 |
| Monomer | HDDA | 47 | 73 | 79.5 | 93 | 47 | 73 | 79.5 | 93 |
| Oligomer | CN985 B88 | - | - | - | - | - | - | - | - |
| Polymerization initiator | Irg2959 | - | - | - | 5 | - | - | - | 5 |
| Polymerization inhibitor | UV12 | 1 | 1 | 1 | - | 1 | 1 | 1 | - |
| Pigment content when dispersing (mass %) | | 40 | 20 | 15 | 3 | 40 | 20 | 15 | 3 |
| DV90 particle size (nm) after dispersing for 3 hours | | 252 | 255 | 395 | 453 | 248 | 256 | 392 | 450 |

### <Preparation of ink compositions A to H>

With regard to ink compositions (hereinafter, also called inks) A to C and inks E to G, of the formulations of ink compositions A to H described in Table 2 below, components other than the pigment dispersion were stirred in a mixer manufactured by SILVERSON (10 to 15 minutes, 2,000 to 3,000 rpm), thus giving uniform transparent liquids A2 to H2. Pigment dispersion A prepared above was added to transparent liquid A2, and further stirring was carried out (10 to 20 minutes, 2,000 to 3,000 rpm), thus giving ink A. The same procedure was carried out for inks B, C, and E to G, thus giving inks B, C, and E to G. For ink D and ink H, dispersion D and dispersion H were used as they were.

Each ink after being prepared was subjected to filtration using a 1.5 µm filter (PROFILE STAR PALL).

### <Print test>

A commercial inkjet printer (LuxelJet UV350GTW, Fujifilm Corporation) was charged with each of the inks prepared above, and print samples of Examples 1 to 6 and Comparative Examples 1 and 2 were produced. The printed material was yellow 100%. The substrate was a coated paper.

Here, '100%' refers to the conditions for the maximum amount of ink obtained when printing is carried out in accordance with printing conditions for the KI ink series (KI867, KI215, KI052, Fujifilm Speciality Ink Systems), which are standard inks for the printer.

The 'conditions for the maximum amount of ink' refers to discharging with the maximum value for the amount of ink applied by the LuxelJet UV350GTW.

The tests described below were carried out using samples of Examples 1 to 6 and Comparative Example 1 and 2.

### [Test procedure 1 (continuous print test)]

10 sheets of an A0 size solid image were continuously printed, and the number of missing nozzles was counted. The evaluation criteria were as shown in Table 3, and the results are given in Table 2.

### [Test procedure 2 (print test after inactivity)]

After it was confirmed that there were no missing nozzles, the inkjet printer was allowed to stand for 12 hours. 12 hours later, a nozzle check pattern was printed without carrying out cleaning maintenance, and the number of missing nozzles was counted. The evaluation criteria were as shown in Table 3, and the results are given in Table 2.

'Missing nozzle' means that the ink was not discharged and an ink image could not be drawn normally.

**Table 2**

| | | Ex. 1 | Ex. 2 | Ex.3 | Comp. Ex. 1 | Ex. 4 | Ex. 5 | Ex. 6 | Comp. Ex. 2 |
|---|---|---|---|---|---|---|---|---|---|
| | | Ink A | Ink B | Ink C | Ink D | Ink E | Ink F | Ink G | Ink H |
| Pigment | Dispersion A | 10 | - | - | - | - | - | - | - |
| | Dispersion B | - | 20 | - | - | - | - | - | - |
| | Dispersion C | - | - | 26.7 | - | - | - | - | - |
| | Dispersion D | - | - | - | 100 | - | - | - | - |
| | Dispersion E | - | - | - | - | 10 | - | - | - |
| | Dispersion F | - | - | - | - | - | 20 | - | - |
| | Dispersion G | - | - | - | - | - | - | 26.7 | - |
| | Dispersion H | - | - | - | - | - | - | - | 100 |
| Monomer | HDDA | 65 | 55 | 48.3 | - | 65 | 55 | 48.3 | - |
| Oligomer | CN985 B88 | 20 | 20 | 20 | - | 20 | 20 | 20 | - |
| Polymerization initiator | Irg2959 | 5 | 5 | 5 | - | 5 | 5 | 5 | - |
| PY184 content in ink (mass %) | | 4 | 4 | 4 | 3 | 4 | 4 | 4 | 3 |
| DV90 particle size after ink formation (nm) | | 252 | 255 | 395 | 453 | 248 | 256 | 392 | 450 |
| Continuous print test | | Exc. | Exc. | Fair | Poor | Exc. | Exc. | Fair | Poor |
| Print test after inactivity | | Good | Good | Fair | Poor | Exc. | Good | Fair | Poor |

**Table 3**

| Test item | Evaluation rank | Details |
|---|---|---|
| Continuous print test | Exc. | 5 sheets printed, two or less nozzles missing |
| | Good | 5 sheets printed, four or less nozzles missing |
| | Fair | 5 sheets printed, six or less nozzles missing |
| | Poor | 5 sheets printed, seven or more nozzles missing |
| Print test after inactivity | Exc. | Printed after allowed to stand for 12 hours, two or less nozzles missing |
| | Good | Printed after allowed to stand for 12 hours, four or less nozzles missing |
| | Fair | Printed after allowed to stand for 12 hours, six or less nozzles missing |
| | Poor | Printed after allowed to stand for 12 hours, seven or more nozzles missing |

### (Examples 7 to 10)

### <Preparation of pigment dispersions I to L >

Of the formulations described in Table 4 below, components other than the pigment were stirred in a mixer manufactured by SILVERSON (10 to 15 minutes, 2,000 to 3,000 rpm), thus giving uniform transparent liquids (dispersant dilution liquids) I1 to L1. The pigment was added to this transparent liquid I1, and further stirring was carried out using a mixer (10 to 20 minutes, 2,000 to 3,000 rpm), thus giving 100 parts of uniform preliminary pigment dispersion I. Subsequently, dispersion was carried out using a circulating bead mill (Laboratory Mini Mill) manufactured by EIGER. Dispersion conditions were such that 100 parts of zirconia beads having a diameter of 0.65 mm was charged, the peripheral speed was 15 m/s, and the dispersion time was 3 hours, and pigment dispersion I was obtained. By carrying out the same procedure, pigment dispersions J to L were prepared. Dispersion exceeding 3 hours makes the production time long and is not preferable in practice.

**Table 4**

| | | Dispersion I | Dispersion J | Dispersion K | Dispersion L |
|---|---|---|---|---|---|
| Pigment | Sicopal L1100 | 40 | - | - | - |
| | Sicopal L1110 | - | 40 | - | - |
| | Sicopal L1120 | - | - | 40 | - |
| | Sicopal L1600 | - | - | - | 40 |
| Dispersant | Sol32000 | 12 | 12 | 12 | 12 |
| | BYK168 | - | - | - | - |
| Monomer | PEA | 47 | 47 | 47 | 47 |
| Polymerization inhibitor | UV12 | 1 | 1 | 1 | 1 |
| PY184 density (g/cm³) | | 5.6 | 7.4 | 5.3 | 5.5 |
| DV90 particle size (nm) after dispersing for 3 hours | | 251 | 254 | 246 | 244 |

### <Preparation of inks I to L>

Of the formulations of inks I to L described in Table 5 below, components other than the pigment dispersion were stirred in a mixer manufactured by SILVERSON (10 to 15 minutes, 2,000 to 3,000 rpm), thus giving uniform transparent liquids I2 to L2. Pigment dispersion I prepared above was added to transparent liquid I2, and further stirring was carried out (10 to 20 minutes, 2,000 to 3,000 rpm), thus giving ink I. The same procedure was carried out to thus give inks J to L.

Each ink after being prepared was subjected to filtration using a 1.5 µm filter (PROFILE STAR PALL). The values in Table 5 below are given as parts by mass.

### <Print test>

A commercial inkjet printer (LuxelJet UV350GTW, Fujifilm Corporation) was charged with the inks I to L prepared above, and print samples of Examples 7 to 10 were produced. The printed material was yellow 100%. The substrate was a coated paper.

Here, 100% refers to the conditions for the maximum amount of ink obtained when printing is carried out in accordance with printing conditions for the KI ink series (KI867, KI215, KI052, Fujifilm Speciality Ink Systems), which are standard inks for the printer.

The tests described below were carried out using samples of Examples 7 to 10.

### [Test procedure 1 (continuous print test)]

10 sheets of an A0 size solid image were continuously printed, and the number of missing nozzles was counted. The evaluation criteria were as shown in Table 3, and the results are given in Table 5.

### [Test procedure 2 (print test after inactivity)]

After it was confirmed that there were no missing nozzles, the printer was allowed to stand for 12 hours. 12 hours later, a nozzle check pattern was printed without carrying out cleaning maintenance, and the number of missing nozzles was counted. The evaluation criteria were as shown in Table 3, and the results are given in Table 5.

**Table 5**

| | | Ex.7 | Ex. 8 | Ex. 9 | Ex. 10 |
|---|---|---|---|---|---|
| | | Ink I | Ink J | Ink K | Ink L |
| Pigment | Dispersion I | 15 | - | - | - |
| | Dispersion J | - | 15 | - | - |
| | Dispersion K | - | - | 15 | - |
| | Dispersion L | - | - | - | 15 |
| Monomer | NVC | 17.5 | 17.5 | 17.5 | 17.5 |
| | CTFA | 35 | 35 | 35 | 35 |
| | PEA | 22.5 | 22.5 | 22.5 | 22.5 |
| Oligomer | CN964 A85 | 3 | 3 | 3 | 3 |
| Polymerization initiator | Irg819 | 3 | 3 | 3 | 3 |
| | TPO | 1 | 1 | 1 | 1 |
| | Irg184 | 1 | 1 | 1 | 1 |
| | ITX | 2 | 2 | 2 | 2 |
| PY184 density (g/cm³) | | 5.6 | 7.4 | 5.3 | 5.5 |
| DV90 particle size (nm) after ink formation | | 251 | 254 | 246 | 244 |
| Continuous print test | | Exc. | Good | Exc. | Exc. |
| Print test after inactivity | | Fair | Fair | Exc. | Exc. |

### (Examples 11 to 14, and Comparative Examples 3 and 4)

### <Preparation of inks K1 to K6>

Of the formulations of inks K1 to K6 described in Table 6 below, components other than the pigment dispersion were stirred in a mixer manufactured by SILVERSON (10 to 15 minutes, 2,000 to 3,000 rpm), thus giving uniform transparent liquids k1 to k6. Pigment dispersion K prepared above was added to transparent liquid k1, and further stirring was carried out (10 to 20 minutes, 2,000 to 3,000 rpm), thus giving ink K1. The same procedure was carried out to thus give inks K2 to K6.

Each ink after being prepared was subjected to filtration using a 1.5 µm filter (PROFILE STAR PALL). The values in Table 6 below are given as parts by mass.

### <Print test>

A commercial inkjet printer (LuxelJet UV350GTW, Fujifilm Corporation) was charged with the inks K1 to K6 prepared above, and print samples of Examples 11 to 14, and Comparative Examples 3 and 4 were produced. The printed material was yellow 100%. The substrate was a coated paper.

Here, 100% refers to the conditions for the maximum amount of ink obtained when printing is carried out in accordance with printing conditions for the KI ink series (KI867, KI215, KI052, Fujifilm Speciality Ink Systems), which are standard inks for the printer.

The tests described below were carried out using samples of Examples 11 to 14 and Comparative Example 3 and 4.

### [Test procedure 1 (continuous print test)]

10 sheets of an A0 size solid image were continuously printed, and the number of missing nozzles was counted. The evaluation criteria were as shown in Table 3, and the results are given in Table 6.

### [Test procedure 2 (print test after inactivity)]

After it was confirmed that there were no missing nozzles, the printer was allowed to stand for 12 hours. 12 hours later, a nozzle check pattern was printed without carrying out cleaning maintenance, and the number of missing nozzles was counted. The evaluation criteria were as shown in Table 3, and the results are given in Table 6.

### [Test procedure 3 (measurement of color density and saturation)]

The color density and saturation (b*) of the printed material produced above was measured using a colorimeter (SpectroEye, Xrite), and the results are given in Table 6.

A color density of 1.25 or above is acceptable. A saturation (b*) of 65 or above is acceptable.

### [Test procedure 4 (scratch resistance)]

The surface of a printed material produced above was examined with respect to whether or not the film was peeled off when rubbing with a Kimtowel (registered trademark) was carried out a maximum of 100 times. The evaluation criteria were as shown in Table 7, and the results are given in Table 6.

**Table 6**

| | | Comp. Ex. 3 | Ex. 11 | Ex. 12 | Ex. 13 | Ex. 14 | Comp. Ex. 4 |
|---|---|---|---|---|---|---|---|
| | | Ink K1 | Ink K2 | Ink K3 | Ink K4 | Ink K5 | Ink K6 |
| Pigment | Dispersion K | 30 | 25 | 15 | 10 | 7.5 | 3.75 |
| Monomer | NVC | 17.5 | 17.5 | 17.5 | 17.5 | 17.5 | 17.5 |
| | CTFA | 35 | 35 | 35 | 35 | 35 | 35 |
| | PEA | 9 | 13.5 | 22.5 | 27 | 29 | 32.75 |
| Oligomer | CN964 A85 | 1.5 | 2 | 3 | 3.5 | 4 | 4 |
| Polymerization initiator | Irg819 | 3 | 3 | 3 | 3 | 3 | 3 |
| | TPO | 1 | 1 | 1 | 1 | 1 | 1 |
| | Irg184 | 1 | 1 | 1 | 1 | 1 | 1 |
| | ITX | 2 | 2 | 2 | 2 | 2 | 2 |
| PY184 content in ink (mass %) | | 12 | 10 | 6 | 4 | 3 | 1.5 |
| DV90 particle size (nm) after ink formation | | 246 | 246 | 246 | 246 | 246 | 246 |
| Continuous print test | | Good | Exc. | Exc. | Exc. | Exc. | Exc. |
| Print test after inactivity | | Poor | Good | Exc. | Exc. | Exc. | Exc. |
| Color density | | 1.55 | 1.66 | 1.53 | 1.35 | 1.28 | 0.8 (Poor) |
| Saturation (b*) | | 80.3 | 86.3 | 80.1 | 73.5 | 68.9 | 48.2 (Poor) |
| Scratch resistance | | Poor | Good | Exc. | Exc. | Exc. | Exc. |

**Table 7**

| Test item | Evaluation rank | Details |
|---|---|---|
| Scratch resistance test | Exc. | No peeled off after rubbing 100 times |
| | Good | Peeled off after 80 to 100 times |
| | Fair | Peeled off after 60 to 79 times |
| | Poor | Peeled off after 59 or fewer times |

### (Examples 16 to 20)

### <Preparation of pigment dispersions M to Q>

Of the formulations of pigment dispersions M to Q described in Table 8 below, components other than the pigment were stirred in a mixer manufactured by SILVERSON (10 to 15 minutes, 2,000 to 3,000 rpm), thus giving uniform transparent liquids (dispersant dilution liquids) M1 to Q1. The pigment was added to this transparent liquid M1, and further stirring was carried out using a mixer (10 to 20 minutes, 2,000 to 3,000 rpm), thus giving 100 parts of uniform preliminary pigment dispersion M. Subsequently, dispersion was carried out using a circulating bead mill (Laboratory Mini Mill) manufactured by EIGER. Dispersion conditions were such that 100 parts of zirconia beads having a diameter of 0.65 mm was charged, the peripheral speed was 15 m/s, and the dispersion time was 3 hours, and pigment dispersion M was obtained. Pigment dispersions N to Q were prepared similarly. Dispersion exceeding 3 hours makes the production time long and is not preferable in practice.

### <Preparation of inks M to Q>

**Table 8**

| | | Dispersion | | | | |
|---|---|---|---|---|---|---|
| | | M | N | O | P | Q |
| Pigment | Sicopal L 1120 | 40 | 40 | 40 | 40 | 40 |
| Dispersant | Synthetic dispersant A | 12 | - | - | - | - |
| | Synthetic dispersant B | - | 12 | - | - | - |
| | Synthetic dispersant C | - | - | 12 | - | - |
| | Synthetic dispersant D | - | - | - | 12 | - |
| | Synthetic dispersant E | - | - | - | - | 12 |
| Monomer | PEA | 47 | 47 | 47 | 47 | 47 |
| Polymerization inhibitor | UV12 | 1 | 1 | 1 | 1 | 1 |
| Dispersant weight-average molecular weight (Mw) | | 300,000 | 180,000 | 50,000 | 20,000 | 10,000 |
| DV90 particle size (nm) after dispersing for 3 hours | | 302 | 246 | 245 | 246 | 244 |

Of the formulations of inks M to Q described in Table 9 below, components other than the pigment dispersion were stirred in a mixer manufactured by SILVERSON (10 to 15 minutes, 2,000 to 3,000 rpm), thus giving uniform transparent liquids M2 to Q2. Pigment dispersion M prepared above was added to transparent liquid M2, and further stirring was carried out (10 to 20 minutes, 2,000 to 3,000 rpm), thus giving ink M. The same procedure was carried out, thus giving inks N to Q. Each ink after being prepared was subjected to filtration using a 1.5 µm filter (PROFILE STAR PALL). The values in Table 9 are given as parts by mass.

### <Print test>

A commercial inkjet printer (LuxelJet UV350GTW, Fujifilm Corporation) was charged with each of the inks M to Q prepared above, and print samples of Examples 16 to 20 were produced. The printed material was yellow 100%. The substrate was a coated paper.

Here, '100%' refers to the conditions for the maximum amount of ink obtained when printing is carried out in accordance with printing conditions for the KI ink series (KI867, KI215, KI052, Fujifilm Speciality Ink Systems), which are standard inks for the printer.

The tests described below were carried out using samples of Examples 16 to 20.

### [Test procedure 1 (continuous print test)]

10 sheets of an A0 size solid image were continuously printed, and the number of missing nozzles was counted. The evaluation criteria were as shown in Table 3, and the results are given in Table 9.

### [Test procedure 2 (print test after inactivity)]

After it was confirmed that there were no missing nozzles, the inkjet printer was allowed to stand for 12 hours and 48 hours. 12 hours and 48 hours later, a nozzle check pattern was printed without carrying out cleaning maintenance, and the number of missing nozzles was counted. The evaluation criteria were as shown in Table 3, and the results are given in Table 9.

**Table 9**

| | | Ex. 16 | Ex. 17 | Ex. 18 | Comp. Ex. 19 | Ex. 20 |
|---|---|---|---|---|---|---|
| | | Ink M | Ink N | Ink O | Ink P | Ink Q |
| Pigment | Dispersion M | 20 | - | - | - | - |
| | Dispersion N | - | 20 | - | - | - |
| | Dispersion O | - | - | 20 | - | - |
| | Dispersion P | - | - | - | 20 | - |
| | Dispersion Q | - | - | - | - | 20 |
| Monomer | NVC | 17.5 | 17.5 | 17.5 | 17.5 | 17.5 |
| | CTFA | 35 | 35 | 35 | 35 | 35 |
| | PEA | 17.5 | 17.5 | 17.5 | 17.5 | 17.5 |
| Oligomer | CN964 A85 | 3 | 3 | 3 | 3 | 3 |
| Polymerization initiator | Irg819 | 3 | 3 | 3 | 3 | 3 |
| | TPO | 1 | 1 | 1 | 1 | 1 |
| | Irg184 | 1 | 1 | 1 | 1 | 1 |
| | ITX | 2 | 2 | 2 | 2 | 2 |
| Dispersant weight-average molecular weight (Mw) | | 300,000 | 180,000 | 50,000 | 20,000 | 10,000 |
| DV90 particle size (nm) after ink formation | | 302 | 246 | 245 | 246 | 244 |
| Continuous print test | | Good | Exc. | Exc. | Exc. | Exc. |
| Print test after inactivity (12 hours) | | Fair | Exc. | Exc. | Exc. | Exc. |
| Print test after inactivity (48 hours) | | Fair | Exc. | Exc. | Good | Fair |

### (Examples 21 to 24, and Comparative Example 5)

### <Preparation of pigment dispersions R to V >

Of the formulations of pigment dispersions R to V described in Table 10 below, components other than the pigment were stirred in a mixer manufactured by SILVERSON (10 to 15 minutes, 2,000 to 3,000 rpm), thus giving uniform transparent liquids (dispersant dilution liquids) R1 to V1. The pigment was added to this transparent liquid R1, and further stirring was carried out using a mixer (10 to 20 minutes, 2,000 to 3,000 rpm), thus giving 100 parts of uniform preliminary pigment dispersion R. Subsequently, dispersion was carried out using a circulating bead mill (Laboratory Mini Mill) manufactured by EIGER. Dispersion conditions were such that 100 parts of zirconia beads having a diameter of 0.65 mm was charged, the peripheral speed was 15 m/s, and the dispersion time was 3 hours, and pigment dispersion R was obtained. By carrying out the same procedure, pigment dispersions S to V were prepared. Dispersion exceeding 3 hours makes the production time long and is not preferable in practice.

**Table 10**

| | | Dispersion | | | | |
|---|---|---|---|---|---|---|
| | | R | S | T | U | V |
| Pigment | Sicopal L1120 | 40 | 40 | 40 | 40 | - |
| | PY150 | - | - | - | - | 25 |
| Dispersant | Sol 32000 | 12 | - | - | - | 12 |
| | TEGODisper685 | - | 12 | - | - | - |
| | Disper BYK168 | - | - | 12 | - | - |
| | EFKA4061 | - | - | - | 12 | - |
| Monomer | CTFA | 47 | 47 | 47 | 47 | 62 |
| Polymerization inhibitor | UV12 | 1 | 1 | 1 | 1 | 1 |
| Pigment type | | PY184 | PY184 | PY185 | PY186 | PY150 |
| Dispersant Tg | | <25°C | <25°C | >25°C | >25°C | <25°C |
| DV90 particle size (nm) after dispersing for 3 hours | | 246 | 246 | 245 | 246 | 246 |

### <Preparation of inks R to V>

Of the formulations of inks R to V described in Table 10 below, components other than the pigment dispersion were stirred in a mixer manufactured by SILVERSON (10 to 15 minutes, 2,000 to 3,000 rpm), thus giving uniform transparent liquids R2 to V2. Pigment dispersion R prepared above was added to transparent liquid R2, and further stirring was carried out (10 to 20 minutes, 2,000 to 3,000 rpm), thus giving ink R. The same procedure was carried out to thus give inks S to V.

Each ink after being prepared was subjected to filtration using a 1.5 µm filter (PROFILE STAR PALL). The values in Table 11 below are given as parts by mass.

### <Print test>

A commercial inkjet printer (LuxelJet UV350GTW, Fujifilm Corporation) was charged with inks R to V prepared above, and print samples of Examples 21 to 24 and Comparative Example 5 were produced. The printed material was yellow 100%. The substrate was a coated paper or a white pigment-coated aluminum plate (used for weatherability test). The printer was charged with magenta ink (KI867), cyan ink (KI215), and black ink (KI004) as well as the yellow ink.

Here, 100% refers to the conditions for the maximum amount of ink obtained when printing is carried out in accordance with printing conditions for the KI ink series (KI867, KI215, KI052, Fujifilm Speciality Ink Systems), which are standard inks for the printer.

The tests described below were carried out using samples of Examples 21 to 24 and Comparative Example 5.

### [Test procedure 1 (continuous print test)]

10 sheets of an A0 size solid image were continuously printed, and the number of missing nozzles was counted. The evaluation criteria were as shown in Table 3, and the results are given in Table 11.

### [Test procedure 2 (print test after inactivity)]

After it was confirmed that there were no missing nozzles, the printer was allowed to stand for 12 hours and 48 hours. 12 hours and 48 hours later, a nozzle check pattern was printed without carrying out cleaning maintenance, and the number of missing nozzles was counted. The evaluation criteria were as shown in Table 3, and the results are given in Table 11.

### [Test procedure 3 (weatherability test)]

Color change and film cross-section were examined using a Xe lamp weathering tester (QSUN, Q-Lab Corporation). The evaluation conditions were such that 1 cycle of step 1 to step 3 below was repeated for a total of 20 cycles.
Step 1 (8 hours): 50°C, 50%RH, with light illumination (about 0.5 mW/cm²), no water spray
Step 2 (8 hours): 50°C, 98%RH, no light illumination, with water spray
Step 3 (8 hours): 20°C, 90%RH, with light illumination (about 0.5 mW/cm²), no water spray

### (Color change)

Color change ΔE was determined by measuring, using an SPM100-II manufactured by Gretag, (a*1, b*1) and luminosity (L1) of a sample aged using the weathering tester and chromaticity (a*2, b*2) and luminosity (L2) of a sample stored in a dark place, and calculating ΔE = {(a*1 - a*2)² + (b*1 - b*2)² + (L1 - L2)²}^{1/2}. The evaluation criteria were as shown in Table 12, and the results are given in Table 11.

### (Cross-section examination)

The printed face of a printed material was sectioned using a hand cutter before aging using the weathering tester, and aging was carried out in a state in which the cross-section of the printed face was exposed. After aging, the presence or absence of peel-off in the cross-section was examined using a microscope. The evaluation criteria were as shown in Table 12, and the results are given in Table 11.

**Table 11**

| | | Ex. 21 | Ex. 22 | Ex. 23 | Ex. 24 | Comp. Ex. 5 |
|---|---|---|---|---|---|---|
| | | Ink R | Ink S | Ink T | Ink U | Ink V |
| Pigment | Dispersion R | 20 | - | - | - | - |
| | Dispersion S | - | 20 | - | - | - |
| | Dispersion T | - | - | 20 | - | - |
| | Dispersion U | - | - | - | 20 | - |
| | Dispersion V | - | - | - | - | 6 |
| Monomer | NVC | 17.5 | 17.5 | 17.5 | 17.5 | 17.5 |
| | CTFA | 35 | 35 | 35 | 35 | 35 |
| | PEA | 17.5 | 17.5 | 17.5 | 17.5 | 31.5 |
| Oligomer | CN964 A85 | 3 | 3 | 3 | 3 | 3 |
| Polymerization initiator | Irg819 | 3 | 3 | 3 | 3 | 3 |
| | TPO | 1 | 1 | 1 | 1 | 1 ' |
| | Irg184 | 1 | 1 | 1 | 1 | 1 |
| | ITX | 2 | 2 | 2 | 2 | 2 |
| Pigment type | | PY184 | PY184 | PY184 | PY184 | PY150 |
| Dispersant Tg | | <25°C | <25°C | >25°C | >25°C | <25°C |
| DV90 particle size (nm) after ink formation | | 302 | 246 | 245 | 246 | 202 |
| Continuous print test | | Exc. | Exc. | Exc. | Exc. | Exc. |
| Print test after inactivity (12 hours) | | Exc. | Exc. | Exc. | Exc. | Exc. |
| Weatherability test (color change) | | Exc. | Exc. | Exc. | Exc. | Poor |
| Weatherability test (cross-section examination) | | Normal | Normal | Slight cracking but within acceptable range | Slight cracking but within acceptable range | Normal |

**Table 12**

| Test item | Evaluation rank | Details |
|---|---|---|
| Weatherability test (color change) | Exc. | ΔE less than 3 |
| | Good | ΔE at least 3 but less than 5 |
| | Fair | ΔE at least 5 but less than 8 |
| | Poor | ΔE at least 8 |
| Weatherability test (cross-section examination) | Acceptable | Normal to slight cracking is within acceptable range |
| | Not acceptable | Cracking |

### -Measurement of weight-average molecular weight (Mw)-

The weight-average molecular weight (Mw) was measured by the method below. The measurement instrument used was an HLC-8220GPC (Tosoh Corporation), and the value was measured on a polystyrene basis by GPC measurement (solvent: *N*-methylpyrrolidone (10 mM LiBr), column: microparticle gel having hydrophilic vinyl polymer as substrate, column temperature: 40°C, flow rate: 0.5 mL/min, sample concentration: 0.1 mass%, amount injected: 60 µL, detector: RI).

### -Measurement of amine value-

The amine value was measured by the procedure below. A polymeric dispersant was dissolved in methyl isobutyl ketone, potentiometric titration was carried out using a 0.01 mole/L methyl isobutyl ketone solution of a perchlorate, and the amine value was defined as that calculated on a mg KOH/g basis. The potentiometric titration was carried out using a COM-1500 automatic titration apparatus manufactured by Hiranuma Sangyo Corporation.

### -Measurement of glass transition temperature (Tg)-

The Tg of the polymeric dispersant in the present invention was a measured Tg obtained by actual measurement. Specifically, measured Tg means a value measured using an EXSTAR6220 differential scanning calorimeter (DSC) manufactured by SII Nanotechnology Inc.

Tg was measured by sealing a polymer particle solids content in an aluminum pan and carrying out under a nitrogen atmosphere
1) a process of cooling from 30°C to -50°C at 50°C/min,
2) a process of heating from -50°C to 140°C at 20°C/min,
3) a process of cooling from 140°C to -50°C at 50°C/min, and
4) a process of heating from -50°C to 140°C at 20°C/min.

The value of a DSC peak top in the heating process of going from -50°C to 140°C in 4) was measured and defined as the Tg.

### -Measurement of 90% volume particle size (DV90)-

The DV90 described in Tables 1, 2, 4 to 6, and 8 to 11 was measured using a laser diffraction particle size distribution analyzer (Mastersizer 2000, Malvern Instrument Ltd.). The solvent at the time of measurement was a propylene glycol ether (QV017 washing liquid for a UV-curable ink, Fujifilm Corporation). With regard to parameters set at the time of measurement, the refractive index of the pigment was 2.6, the absorption of the pigment was 0.01, and the refractive index of the solvent was 1.429.

Pigments used in the Examples were products from BASF as follows.
Sicopal L1100: C.I. Pigment Yellow 184
Sicopal L1110: C.I. Pigment Yellow 184
Sicopal L1120: C.I. Pigment Yellow 184
Sicopal L1600: C.I. Pigment Yellow 184
Cromophtal Yellow D 1085: C.I. Pigment Yellow 150

The polymeric dispersants used in the Examples are shown in Table 13 below. Synthetic dispersants were synthesized by the method above. Commercial products used are listed below.

**Table 13**

| Polymeric dispersant | Weight-average molecular weight | Amine value (mg KOH/g) | Tg |
|---|---|---|---|
| Sol32000 | 45,000 | 10. 3 | < 25°C |
| TEGODisper685 | 68,000 | 37.4 | < 25°C |
| DisperBYK168 | 40,000 | 33.2 | > 25°C |
| EFKA4061 | - | 7.4 | > 25°C |
| Synthetic dispersant A | 300,000 | 42 | > 25°C |
| Synthetic dispersant B | 180,000 | 42 | > 25°C |
| Synthetic dispersant C | 50,000 | 42 | > 25°C |
| Synthetic dispersant D | 20,000 | 42 | > 25°C |
| Synthetic dispersant E | 10,000 | 42 | > 25°C |

| | | | |
|---|---|---|---|
| Sol32000: SOLSPERSE 32000, polymeric dispersant containing amine moiety and having an average molecular weight of about 45,000, The Lubrizol Corporation TEGODisper685: polymeric dispersant containing amine moiety and having an average molecular weight of about 68,000, Tego Chemie Service DisperBYK168: polymeric dispersant containing amine moiety and having an average molecular weight of about 40,000, BYK-Chemie EFKA4061: polymeric dispersant containing amine moiety, Ciba Specialty Chemicals | | | |

Materials such as monomers, initiators, and additives used in the Examples were as follows.
HDDA: SR238, 1,6-hexanediol diacrylate (Sartomer, viscosity: 7 mPa·s (25°C))
NVC: *N*-vinylcaprolactam (BASF)
CTFA: SR531, cyclic trimethylolpropaneformal acrylate (CTFA, Sartomer, viscosity: 12 mPa·s (25°C))
PEA: SR339C, phenoxyethyl acrylate (Sartomer, viscosity: 9 mPa·s (25°C))
CN985 B88: aliphatic urethane diacrylate (Sartomer)
CN964 A85: aliphatic urethane diacrylate (Sartomer)
Irg2959: Irgacure 2959 (polymerization initiator, (1-[4-(2-hydroxyethoxy)phenyl]-2-hydroxy-2-methyl-1-propan-1-one), BASF)
Irg819: Irgacure 819 (polymerization initiator, bis(2,4,6-trimethylbenzoyl)phenylphosphine oxide), BASF)
TPO: Darocur TPO (polymerization initiator, 2,4,6-trimethylbenzoyldiphenylphosphine oxide), BASF)
Irg184: Irgacure 184 (polymerization initiator, 1-hydroxycyclohexyl phenyl ketone, BASF)
ITX: SPEEDCURE ITX, thioxanthones, 2-isopropylthioxanthone and 4-isopropylthioxanthone (LAMBSON)
UV12: FLORSTAB UV12, polymerization inhibitor, Kromachem

## Claims

1. A radiation-curable inkjet ink composition comprising
Pigment Yellow 184 (PY184),
a polymeric dispersant,
a polymerizable compound, and
a polymerization initiator,
the content of PY184 being 2 to 10 mass%, and the 90% volume particle size of PY184 being 200 to 400 nm.

2. The radiation-curable inkjet ink composition according to Claim 1, wherein the density of PY184 is 5.0 to 5.5 g/cm³.

3. The radiation-curable inkjet ink composition according to Claim 1 or 2, wherein the content of PY184 is 4 to 10 mass%.

4. The radiation-curable inkjet ink composition according to any one of Claims 1 to 3, wherein the polymeric dispersant is a polymer having a weight-average molecular weight of 10,000 to 300,000 and an amine value of 10 to 45 mg KOH/g.

5. The radiation-curable inkjet ink composition according to any one of Claims 1 to 4, wherein the polymeric dispersant has a Tg of no greater than 25°C.

6. The radiation-curable inkjet ink composition according to any one of Claims 1 to 5, wherein the polymeric dispersant has a weight-average molecular weight of 45,000 to 250,000.

7. The radiation-curable inkjet ink composition according to any one of Claims 1 to 6, wherein it comprises as the polymerization initiator a bisacylphophine oxide and/or a thioxanthone compound.

8. The radiation-curable inkjet ink composition according to any one of Claims 1 to 7, wherein it comprises as the polymerizable compound *N-*vinylcaprolactam and/or cyclic trimethylolpropaneformal acrylate.

9. The radiation-curable inkjet ink composition according to any one of Claims 1 to 8, wherein it comprises as the polymerizable compound *N-*vinylcaprolactam and cyclic trimethylolpropaneformal acrylate.

10. A process for producing the radiation-curable inkjet ink composition according to any one of Claims 1 to 9, comprising
a pigment dispersion step of subjecting a preliminary pigment dispersion comprising PY184 at 20 to 50 mass% and a polymeric dispersant to a pigment dispersion treatment to thus prepare a pigment dispersion, and
a dilution step of mixing the pigment dispersion and a liquid comprising at least a polymerizable compound and a polymerization initiator to thus produce a radiation-curable inkjet ink composition comprising PY184 at a content of 2 to 10 mass%.

11. An inkjet recording method comprising
(a¹) a step of discharging onto a recording medium the radiation-curable inkjet ink composition according to any one of Claims 1 to 9 or a radiation-curable inkjet ink composition produced by the process according to Claim 10, and
(b¹) a step of irradiating the discharged inkjet ink composition with actinic radiation to thus cure the inkjet ink composition.

12. The inkjet recording method according to Claim 11, wherein the recording medium is a building material.

13. A printed material formed by the inkjet recording method according to Claim 11 or 12.

## Patentansprüche

1. Strahlungshärtbare Tintenstrahl-Tintenzusammensetzung aufweisend
Pigment Yellow 184 (PY184),
ein polymeres Dispergiermittel,
eine polymerisierbare Verbindung, und
einen Polymerisationsinitiator,
wobei der Gehalt an PY184 2 bis 10 Masse% beträgt und die volumetrische 90%-Partikelgröße von PY184 200 bis 400 nm beträgt.

2. Strahlungshärtbare Tintenstrahl-Tintenzusammensetzung nach Anspruch 1, wobei die Dichte von PY184 5,0 bis 5,5 g/cm³ beträgt.

3. Strahlungshärtbare Tintenstrahl-Tintenzusammensetzung nach Anspruch 1 oder 2, wobei der Gehalt an PY184 4 bis 10 Masse% beträgt.

4. Strahlungshärtbare Tintenstrahl-Tintenzusammensetzung nach einem der Ansprüche 1 bis 3, wobei das polymere Dispergiermittel ein Polymer mit einer massegemittelten Molekülmasse von 10.000 bis 300.000 und einer Aminzahl von 10 bis 45 mg KOH/g ist.

5. Strahlungshärtbare Tintenstrahl-Tintenzusammensetzung nach einem der Ansprüche 1 bis 4, wobei das polymere Dispergiermittel eine Tg von nicht größer als 25°C hat.

6. Strahlungshärtbare Tintenstrahl-Tintenzusammensetzung nach einem der Ansprüche 1 bis 5, wobei das polymere Dispergiermittel eine massegemittelte Molekülmasse von 45.000 bis 250.000 hat.

7. Strahlungshärtbare Tintenstrahl-Tintenzusammensetzung nach einem der Ansprüche 1 bis 6, wobei sie als den Polymerisationsinitiator eine Bisacylphosphinoxid- und/oder eine Thioxanthon-Verbindung aufweist.

8. Strahlungshärtbare Tintenstrahl-Tintenzusammensetzung nach einem der Ansprüche 1 bis 7, wobei sie als die polymerisierbare Verbindung N-Vinylcaprolactam und/oder zyklisches Trimethylolpropanformal-acrylat aufweist.

9. Strahlungshärtbare Tintenstrahl-Tintenzusammensetzung nach einem der Ansprüche 1 bis 8, wobei sie als die polymerisierbare Verbindung N-Vinylcaprolactam und zyklisches Trimethylolpropanformal-acrylat aufweist.

10. Verfahren zur Herstellung der strahlungshärtbaren Tintenstrahl-Tintenzusammensetzung nach einem der Ansprüche 1 bis 9, aufweisend
einen Pigment-Dispergierungsschritt des Unterziehens einer Pigment-Vordispersion, die 20 bis 50 Masse% PY184 und ein polymeres Dispergiermittel aufweist, einer Pigment-Dispergierungsbehandlung, um so eine Pigment-Dispersion zu bereiten, und
einen Verdünnungsschritt des Vermischens der Pigment-Dispersion und einer Flüssigkeit, die mindestens eine polymerisierbare Verbindung und einen Polymerisationsinitiator aufweist, um so eine strahlungshärtbare Tintenstrahl-Tintenzusammensetzung herzustellen, die PY184 mit einem Gehalt von 2 bis 10 Masse % aufweist.

11. Tintenstrahl-Aufzeichnungsverfahren aufweisend
(a¹) einen Schritt des Ausstoßens der strahlungshärtbaren Tintenstrahl-Tintenzusammensetzung nach einem der Ansprüche 1 bis 9 oder einer strahlungshärtbaren Tintenstrahl-Tintenzusammensetzung, die nach dem Verfahren nach Anspruch 10 hergestellt wurde, auf ein Aufzeichnungsmedium, und
(b¹) einen Schritt des Bestrahlens der ausgestoßenen Tintenstrahl-Tintenzusammensetzung mit aktinischer Strahlung, um so die Tintenstrahl-Tintenzusammensetzung zu härten.

12. Tintenstrahl-Aufzeichnungsverfahren nach Anspruch 11, wobei das Aufzeichnungsmedium ein Baumaterial ist.

13. Bedrucktes Material, das mittels des Tintenstrahl-Aufzeichnungsverfahrens nach Anspruch 11 oder 12 hergestellt wurde.

## Revendications

1. Composition d'encre pour jet d'encre durcissable par rayonnement, comprenant :
Pigment Yellow 184 (PY184) ;
un dispersant polymère ;
un composé polymérisable, et
un initiateur de polymérisation,
la teneur en PY184 étant de 2 à 10 % en masse, et la taille volumétrique de particules à 90 % du PY84 allant de 200 à 400 nm.

2. Composition d'encre pour jet d'encre durcissable par rayonnement selon la revendication 1, dans laquelle la densité de PY184 s'étend de 5,0 à 5,5 g/cm³.

3. Composition d'encre pour jet d'encre durcissable par rayonnement selon la revendication 1 ou 2, dans laquelle la densité de PY184 s'étend de 4 à 10 % en masse.

4. Composition d'encre pour jet d'encre durcissable par rayonnement selon l'une quelconque des revendications 1 à 3, dans laquelle le dispersant polymère est un polymère présentant un poids moléculaire en poids moyen allant de 10 000 à 300 000, et une valeur d'amine allant de 10 à 45 mg KOH/g.

5. Composition d'encre pour jet d'encre durcissable par rayonnement selon l'une quelconque des revendications 1 à 4, dans laquelle le dispersant polymère présente une Tg non supérieure à 25 °C.

6. Composition d'encre pour jet d'encre durcissable par rayonnement selon l'une quelconque des revendications 1 à 5, dans laquelle le dispersant polymère présente un poids moléculaire en poids moyen allant de 45 000 à 250 000.

7. Composition d'encre pour jet d'encre durcissable par rayonnement selon l'une quelconque des revendications 1 à 6, dans laquelle celle-ci comprend comme initiateur de polymérisation un oxyde de bisacylphosphine et/ou un composé thioxanthone.

8. Composition d'encre pour jet d'encre durcissable par rayonnement selon l'une quelconque des revendications 1 à 7, dans laquelle celle-ci comprend comme composé polymérisable du N-vinylcaprolactame et/ou du triméthylolpropaneformal acrylate cyclique.

9. Composition d'encre pour jet d'encre durcissable par rayonnement selon l'une quelconque des revendications 1 à 8, dans laquelle celle-ci comprend comme composé polymérisable du N-vinylcaprolactame et du triméthylolpropaneformal acrylate cyclique.

10. Processus pour produire la composition d'encre pour jet d'encre durcissable par rayonnement selon l'une quelconque des revendications 1 à 9, comprenant les étapes suivantes :
une étape de dispersion de pigment pour soumettre une dispersion de pigment préliminaire comprenant PY184 à raison de 20 à 50 % en mase et un dispersant polymère à un traitement de dispersion de pigment, afin ainsi de préparer une dispersion de pigment, et
une étape de dilution pour mélanger la dispersion de pigment et un liquide comprenant au moins un composé polymérisable et un initiateur de polymérisation, afin ainsi de produire une composition d'encre pour jet d'encre durcissable par rayonnement comprenant PY184 avec une teneur allant de 2 à 10 % en masse.

11. Procédé d'enregistrement à jet d'encre comprenant :
(a¹) une étape pour déverser sur un support d'enregistrement la composition d'encre pour jet d'encre durcissable par rayonnement selon l'une quelconque des revendications 1 à 9, ou une composition d'encre pour jet d'encre durcissable par rayonnement produite selon le processus selon la revendication 10, et
(b¹) une étape pour irradier la composition d'encre pour jet d'encre déversée avec un rayonnement actinique, pour ainsi durcir la composition d'encre pour jet d'encre.

12. Procédé d'enregistrement à jet d'encre selon la revendication 11, dans lequel le support d'enregistrement est un matériau de construction.

13. Imprimé formé par le procédé d'enregistrement à jet d'encre selon la revendication 11 ou 12.
